# EUROPEAN PATENT APPLICATION

(11) **EP 4 738 545 A1**
(43) Date of publication of application: **06.05.2026**
(21) Application number: 25794785.3
(22) Date of filing: 25.03.2025
(51) Int. Cl.: H01M 10/6568, H01M 10/613, H01M 10/625, H01M 50/24, H01M 50/204, H01M 10/6557

(54) **BATTERY ASSEMBLY AND BATTERY PACK INCLUDING SAME**

(30) Priority: 26.04.2024 KR 20240056163; 01.11.2024 KR 20240153476
(71) Applicant: LG Energy Solution, Ltd., Seoul 07335 (KR)
(72) Inventor: JUNG, Minyong, Daejeon 34122 (KR); CHOI, Bum, Daejeon 34122 (KR); CHOI, Seungbin, Daejeon 34122 (KR); CHUNG, Jaeheon, Daejeon 34122 (KR)
(74) Representative: Plasseraud IP
(86) International application number: PCT/KR2025/095080
(87) International publication number: WO 2025/226097

(57) **Abstract**

A battery assembly according to an embodiment of the present disclosure comprises a plurality of battery cells; and a cell frame in which the plurality of battery cells are stored. The inside of the cell frame is provided with a cooling flow path through which a coolant flows while being in direct contact with at least a part of the battery cells. The cooling flow path comprises a plurality of cooling flow paths arranged along a longitudinal direction of the battery cells in which the battery cells extend. A flow direction of the coolant in any one of the plurality of cooling flow paths and a flow direction of the coolant in the other of the plurality of cooling flow paths are opposite to each other.

## Description

### [TECHNICAL FIELD]

### Cross-Reference to Related Application(s)

This application claims priority to and the benefit of Korean Patent Application no. KR10-2024-0056163, filed on April 26, 2024, and Korean Patent Application no. KR10-2024-0153476, filed on November 1, 2024, with the Korean Intellectual Property Office, the entire contents of which are incorporated herein by reference.

The present disclosure relates to a battery assembly and a battery pack including the same, and more particularly, to a battery assembly using an immersion cooling system and a battery pack including the same

### [BACKGROUND ART]

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. Such a secondary battery is widely used as a novel energy source for enhancing environment friendliness and energy efficiency, in that it has a primary advantage of remarkable reducing the use of fossil fuels, and also generates no by-products resulting from the use of energy.

The types of secondary batteries currently include a lithium ion battery, a lithium polymer battery, a nickel cadmium battery, a nickel hydride battery, a nickel zinc battery, and the like. An operating voltage of the unit secondary battery cell, namely a unit battery cell, is about 2.5V to 4.5V. Therefore, when an output voltage higher than the operating voltage is required, a plurality of battery cells may be connected in series to configure a battery pack. In addition, depending on the charge/discharge capacity required for the battery pack, a plurality of battery cells may also be connected in parallel to configure a battery pack. Thus, the number of battery cells included in the battery pack may be variously set in accordance with the required output voltage or charge/discharge capacity.

Meanwhile, when a plurality of battery cells are connected in series/parallel to configure a battery pack, a common method employs a process of first making a battery assembly including a plurality of battery cells and housing it in a module case to configure a battery module, and then gather one or more battery modules and adding other components thereto to configure a battery pack, or a process of disposing a plurality of battery cells in a pack frame and adding other components thereto to configure a battery pack.

Since these battery cells are constituted of secondary batteries that can be recharged and discharged, such high-output, large-capacity secondary batteries generate a large amount of heat in a charge and discharge process. In this case, the heat emitted from the plurality of battery cells is accumulated in a narrow space, which may raise the temperature of the battery module quickly and severely. In other words, a battery module including a large number of battery cells can obtain high output, but it is not easy to remove heat generated from the battery cells during charging and discharging. When the heat dissipation of the battery cell is not properly performed, deterioration of the battery cells is accelerated, the lifetime is shortened, and the possibility of explosion or ignition increases.

Moreover, in the case of a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in any one of the battery cells can easily propagate to adjacent battery cells, which may eventually lead to ignition or explosion of the battery pack itself.

Conventionally, the battery assembly has adopted a bottom cooling or side cooling system in which a heat sink is mounted in the module case of the battery module for cooling.

However, in the case of battery modules using such a cooling system, heat generated in the battery cells is transferred to the heat sink on one side of the module case and cooled, so that a heat transfer path is not easily provided on the other side of the module case. Thereby, they have a limitation that the temperature deviation between one end and the other end of the battery assembly is deepened, or the cooling efficiency is not satisfactory as a whole. If the temperature deviation is not resolved, it will cause safety and durability issues for the battery module. If the cooling efficiency is not good, it may accelerate deterioration of the battery cells, or it may not be possible to quickly address when thermal runaway occurs in some battery cells, which leads to thermal runaway propagation. This may lead to disasters such as ignition and explosion of a battery module or a battery pack containing the same, which may cause not only property damage but also safety problems.

In order to solve these problems, it has been proposed to use a system in which the inside of the battery pack is filled with cooling water or insulating oil to directly cool the battery cells, without using bottom cooling or side cooling. That is, in order to effectively cool a high-capacity battery pack, an immersion cooling system has been used in which a coolant directly cools the battery cells inside the battery pack.

However, as battery assemblies and battery packs including the same are increased in size, the number of battery cells increases, and the number of components required for the battery assemblies and battery packs increases, there is a difference in the degree of being cooled by the coolant for each zone, so that all battery cells inside the battery assembly are not uniformly cooled, which may lead to a decrease in the cooling efficiency of the entire battery assembly. Since the decrease in the cooling efficiency of the battery assembly can lead to performance degradation and safety issues of the battery assembly, securing uniform cooling for all battery cells in the immersion cooling system corresponds to critical development issues.

### [DETAILED DESCRIPTION OF THE INVENTION]

### [Technical Problem]

It is an object of the present disclosure to provide a battery assembly capable of eliminating cooling imbalances to battery cells and minimizing deviations in thermal resistance of the battery cells, and a battery pack including the same.

However, the technical objects to be solved by embodiments of the present disclosure are not limited to the above-mentioned objects, and can be variously expanded within the scope of the technical idea included in the present disclosure.

### [Technical Solution]

According to certain aspects of the present disclosure, there is provided a battery assembly comprising: a plurality of battery cells; and a cell frame in which the plurality of battery cells are stored. The inside of the cell frame is provided with a cooling flow path through which a coolant flows while being in direct contact with at least a part of the battery cells. The cooling flow path comprises a plurality of cooling flow paths arranged along a longitudinal direction of the battery cells in which the battery cells extend. A flow direction of the coolant in any one of the plurality of cooling flow paths and a flow direction of the coolant in the other of the plurality of cooling flow paths are opposite to each other.

The longitudinal direction may be a direction between one surface of the battery cell and the other surface facing the one surface. At least one of electrode terminals of the battery cells may be located on the one surface of the battery cells.

The cell frame may comprise an inlet port into which the coolant flows, with the coolant flowing through the cooling flow path and being in direct contact with the battery cells, and an outlet port through which the coolant is discharged.

Any one of the plurality of cooling flow paths may be connected to the inlet port, and the other of the plurality of cooling flow paths may be connected to the outlet port.

The coolant flowing into the inlet port may flow along the cooling flow paths and then be discharged through the outlet port.

The area where at least one cooling flow path made to match with the flow direction of the coolant among the plurality of cooling flow paths is in contact with the battery cell may be 30% or more and 70% or less of the area where all of the plurality of cooling flow paths are in contact with the battery cell.

The cooling flow paths may comprise a first cooling flow path and a second cooling flow path. The flow direction of the coolant in the first cooling flow path and the flow direction of the coolant in the second cooling flow path may be opposite to each other.

The cell frame may comprise a separation part that partitions the first cooling flow path and the second cooling flow path and is located between the first cooling flow path and the second cooling flow path.

Based on the longitudinal direction of the battery cell, the separation part may be located in a space between the 30% point of the height of the battery cell and the 70% point of the height of the battery cell.

The cell frame may comprise a connection hole that connects a plurality of cooling flow paths.

In in the connection hole, the width of the space through which the coolant flows may be constant.

The connection hole may have a region where the width of the space where the coolant flows is narrowed.

In in the connection hole, the width difference between the widest part of the space where the coolant flows and the narrowest part of the space where the coolant flows may be 1.0 mm or more, and may be not more than 5 times the gap between the battery cells.

The cell frame may comprise an inlet port and an outlet port through which the coolant flows in and is discharged, with the coolant flowing through the cooling flow path and being in direct contact with the battery cells, and at least one of the inlet port or the outlet port may be provided with a distribution mechanism that divides the coolant into a plurality of cooling channels. The connection holes are provided in plurality of numbers, and the plurality of connection holes may correspond one to one to the cooling channels distributed by the distribution mechanism.

The gap between the battery cells may be 1.5 mm or more and 2.5 mm or less.

The cell frame may comprise a bottom cell frame on which the battery cells are seated and a cover cell frame located on the bottom cell frame.

The cover cell frame may comprise a middle cell frame and a top cell frame located on the middle cell frame. The space between the middle cell frame and the bottom cell frame and the space between the top cell frame and the middle cell frame may correspond to the cooling flow paths, respectively.

Each of the middle cell frame and the top cell frame may be a member that includes an upper surface part and a side surface part facing downward from an edge of the upper surface part.

The middle cell frame may be a member that includes an intermediate part, a first side surface part facing upward from an edge of the intermediate part, and a second side surface part facing downward from an edge of the intermediate part, and the top cell frame may be a plate-shaped member.

The battery cells may be mounted directly to a vehicle or chassis in a state of being stored in the cell frame.

According to certain other aspects of the present disclosure, there is provided a battery pack comprising: the above-mentioned battery assembly; a pack frame that stores the battery assembly and is opened on one side, and a pack cover that covers the opened one side of the pack frame.

### [Advantageous Effects]

According to certain embodiments of the present disclosure, the inside of the cell frame is provided with a plurality of cooling flow paths arranged along the longitudinal direction of the battery cell, wherein the flow directions of the coolant are opposite to each other, which makes it possible to minimize the cooling deviation for all battery cells in the battery assembly, and thus minimize deviations in thermal resistance of all battery cells.

In addition, even if the battery assembly and the battery pack including the same are increased in size, the degree of being cooled by the coolant for each zone can be uniformly maintained.

If the temperature deviation between the battery cells is minimized, it is possible to prevent deterioration of specific battery cells due to long-term charge/discharge cycles, thereby extending the life of the battery assembly and the battery pack including the same and ensuring the safety.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a battery assembly according to an embodiment of the present disclosure.
FIG. 2 is a plan view showing the battery assembly of FIG. 1 as viewed along the -z axis on the xy plane.
FIG. 3 is an exploded perspective view of the battery assembly of FIG. 1.
FIGS. 4(a) and (b) are respectively a perspective view and a side view of a battery cell according to an embodiment of the present disclosure.
FIG. 5 is a cross-sectional view showing a cross section taken along the cutting line C-C' of FIG. 4(a).
FIG. 6 is a cross-sectional view of a battery cell according to an embodiment of the present disclosure.
FIG. 7 is a partial perspective view of the battery assembly of FIG. 1.
FIG. 8 is a cross-sectional view showing a cross section taken along the cutting line A-A' of FIG. 2.
FIG. 9 is a partially enlarged cross-sectional view showing a portion "D" of FIG. 8.
FIG. 10 is a partially enlarged cross-sectional view showing a portion "E" of FIG. 8.
FIG. 11 is a cross-sectional view showing a cross section taken along the cutting line B-B' of FIG. 2.
FIG. 12 is a partially enlarged cross-sectional view showing a part of FIG. 9.
FIG. 13 is a perspective view of a middle cell frame according to an embodiment of the present disclosure.
FIG. 14 is a cross-sectional perspective view showing a cross section taken along the cutting line F-F' of FIG. 13.
FIG. 15 is a front view of the middle cell frame of Fig. 14 as viewed from the front.
FIG. 16 is a cross-sectional view showing a cross section taken along the cutting line G-G' of FIG. 13.
FIG. 17 is a perspective view of a top cell frame according to an embodiment of the present disclosure.
FIG. 18 is a cross-sectional perspective view showing a cross section taken along the cutting line H-H' of FIG. 17.
FIG. 19 is a front view of the top cell frame of FIG. 18 as viewed from the front.
FIG. 20 is a cross-sectional view taken along the cutting line I-I' of FIG. 17.
FIG. 21 is a cross-sectional view showing the relationship between the inlet distribution mechanism and the battery cells according to an embodiment of the present disclosure.
FIG. 22 is a cross-sectional view showing the relationship between the outlet distribution mechanism and the battery cells according to an embodiment of the present disclosure.
FIGS. 23(a) and (b) are diagrams showing various shapes of connection holes according to embodiments of the present disclosure.
FIG. 24 is a partially enlarged perspective view showing a part of a middle cell frame according to an embodiment of the present disclosure.
FIG. 25 is a cross-sectional view of a battery assembly according to an embodiment of the present disclosure.
FIG. 26 is a cross-sectional view of a battery assembly according to another embodiment of the present disclosure.
FIG. 27 is a cross-sectional view of a battery assembly according to another embodiment of the present disclosure.
FIGS. 28 and 29 are exploded perspective views of a battery pack according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

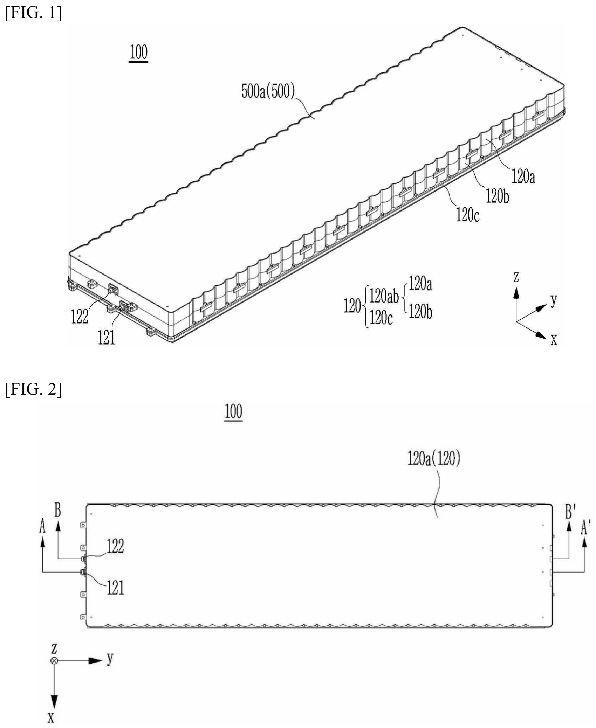

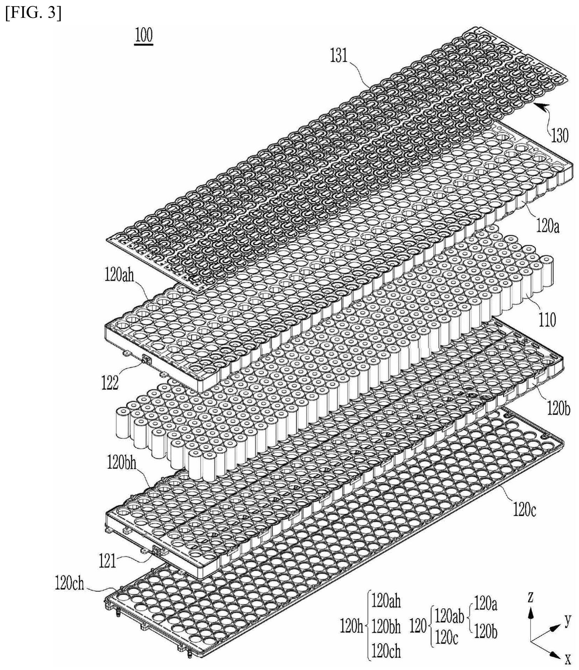

FIG. 1 is a perspective view showing a battery assembly according to an embodiment of the present disclosure. FIG. 2 is a plan view showing the battery assembly of FIG. 1 as viewed along the -z axis on the xy plane. FIG. 3 is an exploded perspective view of the battery assembly of FIG. 1.

Referring to FIGS. 1 to 3, a battery assembly 100 according to an embodiment of the present disclosure includes: a plurality of battery cells 110; and a cell frame 120 in which the plurality of battery cells 110 are stored. The inside of the cell frame 120 is provided with a cooling flow path through which a coolant flows while being in direct contact with at least a part of the battery cells 110. The cooling flow path will be described in detail later.

The coolant can circulate inside the cell frame 120 while being in direct contact with the battery cells 110. That is, the battery assembly 100 according to this embodiment applies an immersion cooling system in which a coolant directly cools the battery cells. In the present disclosure, at least a part of the battery cell 110 may be in contact with the coolant for cooling. That is, in one specific embodiment, a part of the outer surface of the battery cell 110 may be in contact with the coolant, and in other embodiments, the whole of the outer surface of the battery cell 110 may be in contact with the coolant.

The cell frame 120 comprises an inlet port 121 into which the coolant flows, with the coolant flowing through the cooling flow path and being in direct contact with the battery cells 110, and an outlet port 122 through which the coolant is discharged.

The following specifically describes the battery cell 110 according to this embodiment first. The battery cell 110 according to this embodiment may be applied to any type of secondary battery, such as a prismatic, cylindrical, or pouch-shaped battery cell. However, the battery cell 110, which is a cylindrical cell, will be described below as an exemplarily embodiment.

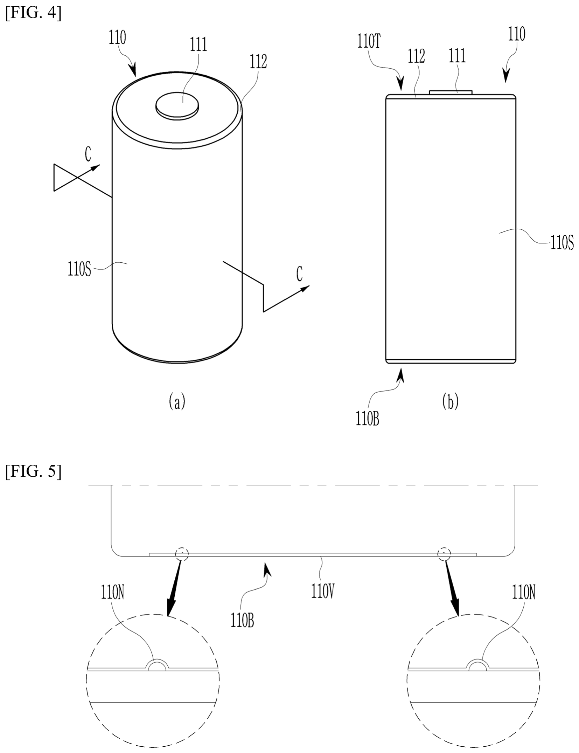

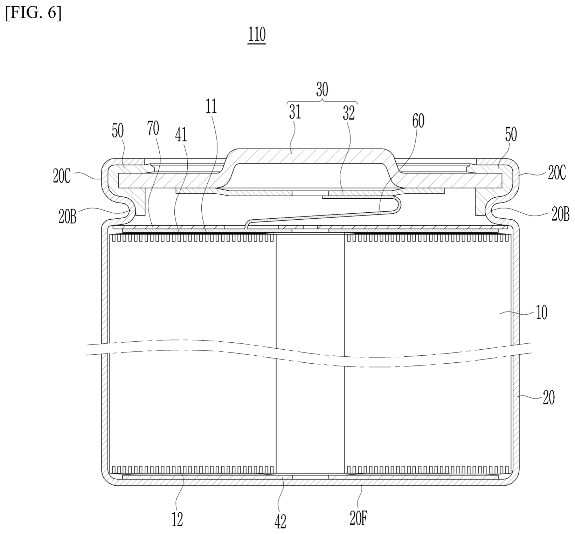

FIGS. 4(a) and (b) are respectively a perspective view and a side view of a battery cell according to an embodiment of the present disclosure. FIG. 5 is a cross-sectional view showing a cross section taken along the cutting line C-C' of FIG. 4(a). FIG. 6 is a cross-sectional view of a battery cell according to an embodiment of the present disclosure.

Referring to FIGS. 4 to 6, the battery cell 110 according to this embodiment may be a cylindrical cell, and may have a vent part 110V. The vent part 110V collectively refers to a member or mechanism provided in the battery cell 110 so as to be able to discharge venting gas or the like inside the battery cell 110. Further, each battery cell 110 may include a first electrode terminal 111 and a second electrode terminal 112 as positive and negative electrode terminals.

In one embodiment, the battery cell 110 according to this embodiment may be a cylindrical battery cell. Specifically, the battery cell 110 may include an electrode assembly 10; a battery can 20 that stores the electrode assembly 10 and has an opened upper part; and a cap assembly 30 that is coupled to the opened upper part of the battery can 20. A gasket 50 may be interposed between the battery can 20 and the cap assembly 30. An exemplary structure of the battery cell 110 will be described below, but the battery cell of the present disclosure is not limited to such a structure.

The battery can 20 according to this embodiment may be a cylindrical case having an opened upper part, may store the electrode assembly 10 and an electrolytic solution (not shown) in an internal storage space, and may include a metal material such as aluminum (Al).

The cap assembly 30 according to this embodiment may include a top cap 31 having a plate shape, and a connecting plate 32 electrically and mechanically coupled to the top cap 31. The top cap 31 may include a metal material having electrical conductivity, and may cover the opened upper part of the battery can 20. The top cap 31 may be electrically connected to the first segment 11 connected to the first electrode of the electrode assembly 10, and at the same time, may be electrically insulated from the battery can 20 by a gasket 50. Therefore, the cap assembly 30 according to this embodiment including the top cap 31 may function as a first electrode terminal 111, which is an external terminal of the first electrode included in the electrode assembly 10.

Specifically, in the electrical connection between the top cap 31 and the first segment 11, the battery cell 110 according to this embodiment may further comprise a first current collecting plate 41 located on the upper part of the electrode assembly 10. The first current collecting plate 41 may include a conductive metal material such as aluminum, copper, steel, nickel, etc., and may be electrically connected to the first segments 11 of the electrode assembly 10. The electrical connection may be performed through weld-bonding. A lead 60 may be connected to such a first current collecting plate 41. The lead 60 may extend in the upper direction of the electrode assembly 10 and be connected to the connecting plate 32. In other embodiments, the lead 60 may be directly coupled to the lower surface of the top cap 31. The coupling between the lead 60 and other components may be performed through welding. In addition, the first current collecting plate 41 may be formed integrally with the lead 60. In this case, the lead 60 may have a long plate shape extending outward from a vicinity of the central part of the first current collecting plate 41.

The first current collecting plate 41 may be provided with a plurality of projections and recesses (not shown) formed radially on its lower surface. In the case where the radial projections and recesses are provided, the first current collecting plate 41 may be pressed to press-fit the projections and recesses into the bent first segments 11. The coupling between the first current collecting plate 41 and the first segments 11 may be performed, for example, by laser welding. Laser welding may be performed by partially melting a base material of the first current collecting plate 41. In modified embodiments, welding between the first current collecting plate 41 and the first segments 11 may be performed in a state of interposing a solder. In this case, the solder may have a lower melting point compared to the first current collecting plate 41 and the first segments 11. Laser welding may be replaced by resistance welding, ultrasonic welding, spot welding, etc.

Meanwhile, the battery cell 110 according to this embodiment may further comprise a second current collecting plate 42 located at a lower part of the electrode assembly 10. Specifically, the second current collecting plate 42 may be located between the electrode assembly 10 and the bottom part 20F of the battery can 20. The second current collecting plate 42 may include a conductive metal material such as aluminum, copper, steel, nickel, etc., and may be electrically connected to the second segments 12 of the electrode assembly 10. One surface of the second current collecting plate 42 may be coupled to the second segments 12, and the opposite surface of the second current collecting plate 42 may be coupled to the bottom part 20F of the battery can 20. Weld-bonding may be applied to the coupling of the second current collecting plate 42. Thereby, the battery can 20 according to this embodiment can function as a second electrode terminal 112, which is an external terminal of the second electrode included in the electrode assembly 10.

Meanwhile, the secondary battery according to this embodiment may include an insulating plate 70. The insulating plate 70 may cover the first current collecting plate 41. The insulating plate 70 covers the first current collecting plate 41 on the upper surface of the first current collecting plate 41, and thus can block the first current collecting plate 41 from coming into contact with the battery can 20, particularly the beading part 20B of the battery can 20 described below. The insulating plate 70 may also be provided with a separate lead hole so that a lead 60 extending upward from the first current collecting plate 41 can be pulled out. The lead 60 may be pulled out upward through the lead hole of the insulating plate 70 and coupled to the lower surface of the connecting plate 32 or the lower surface of the top cap 31.

The peripheral edge region of the insulating plate 70 can be interposed between the first current collecting plate 41 and the beading part 20B of the battery can 20, thereby fixing a coupling body between the electrode assembly 10 and the first current collecting plate 41. Therefore, the coupling body between the electrode assembly 10 and the first current collecting plate 41 can limit its movement in the axial direction of the electrode assembly 10, thereby improving the assembling stability of the secondary battery. The insulating plate 70 can be made of a polymer resin having insulating properties. In one embodiment, the insulating plate 70 can include one or more materials selected from the group consisting of polyethylene, polypropylene, polyimide, and polybutylene terephthalate.

Meanwhile, the battery can 20 according to this embodiment may include a crimping part 20C and a beading part 20B. The crimping part 20C is a part of the battery can 20 that wraps around the cap assembly 30 and the gasket 50. Specifically, the battery can 20 and the cap assembly 30 may be crimp-bonded with the gasket 50 being interposed between them. That is, the crimp-bonding may be applied to the coupling between the battery can 20 and the cap assembly 30. Thus, the crimping part 20C may be formed in the battery can 20. More specifically, the gasket 50 is located between the battery can 20 and the cap assembly 30, and then an upper end of the battery can 20 is bent in the direction where the cap assembly 30 is located, thereby achieving crimp-bonding.

The beading part 20B refers to a portion where a part of the battery can 20 is recessed toward the center in a region higher than the electrode assembly 10 among the side surface parts of the battery can 20, and is intended to stably arrange the cap assembly 30 and to prevent movement of the electrode assembly 10. That is, the cap assembly 30 according to this embodiment and the gasket 50 surrounding it can be seated on the beading part 20B of the battery can 20. The above-described crimp bonding can be performed in a state where the cap assembly 30 and the gasket 50 surrounding it are seated on the beading part 20B.

The gasket 50 according to this embodiment is located between the battery can 20 and the cap assembly 30, and thus can enhance the sealing performance of the secondary battery. The gasket 50 may also include an electrically insulating material, and may block the occurrence of a short circuit between the battery can 20 functioning as the second electrode terminal 112 and the cap assembly 30 functioning as the first electrode terminal 111. The gasket 50 may include at least one material selected from the group consisting of polypropylene (PP), polyethylene terephthalate (PET), polybutylene terephthalate (PBT), and perfluoroalkoxy alkane (PFA).

The vent part 110V according to this embodiment may be formed on the lower surface of the battery cell 110. That is, it may be formed on the bottom part 20F (see FIG. 6) of the battery can 20.

When a thermal event or thermal runaway occurs inside any battery cell 110, high-temperature venting gas or particles may be generated. The vent part 110V collectively refers to a member or mechanism that can discharge such high-temperature venting gas or particles. In one embodiment, a notch part 110N, which is relatively thinner than a region adjacent to the bottom part of the battery, may may be formed on the lower surface of the battery cell 110. The notch part 110N may have a constant peripheral edge. When the internal pressure of the battery cell 110 increases due to high-temperature venting gas generated inside any one of the battery cells 110, the notch part 110N that is weak in rigidity due to its thin thickness may be ruptured first. Due to the rupture of the notch part 110N, the vent part 110V is opened, and high-temperature venting gas or particles, etc. can be discharged through the vent part 110V that is opened in this manner.

However, the structure of the vent part 110V is only one illustrative example, and the shape of the vent part 110V is not particularly limited as long as it is a member or mechanism that can discharge the internal venting gas in the event of a thermal event or thermal runaway.

Meanwhile, although not specifically shown in the figure, the battery cell according to the present disclosure may be a prismatic battery cell in which the electrode assembly is stored in a prismatic can. That is, although the battery cell according to this embodiment is depicted in the figure as being a cylindrical battery cell, this is only one illustrative structure of the battery cell of the present disclosure, and the battery cell according to certain other embodiments of the present disclosure may be a prismatic battery cell.

The battery cells 110 can be arranged in columns and rows within the cell frame 120, and the battery cells 110 can be electrically connected to each other via busbars or the like which will be described later.

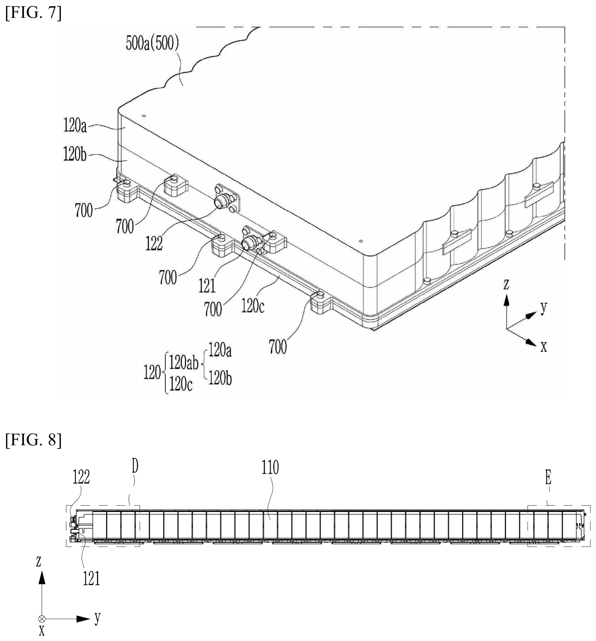

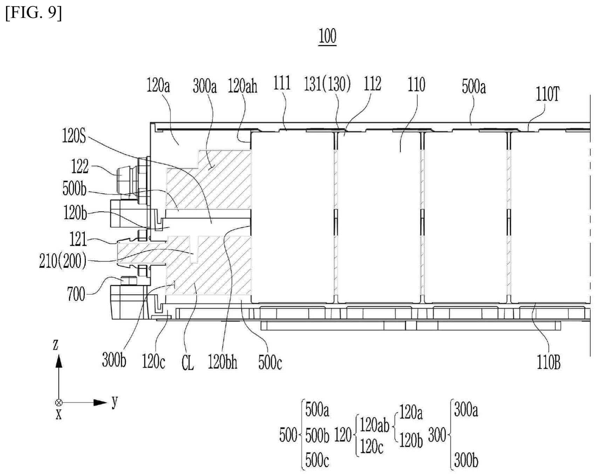

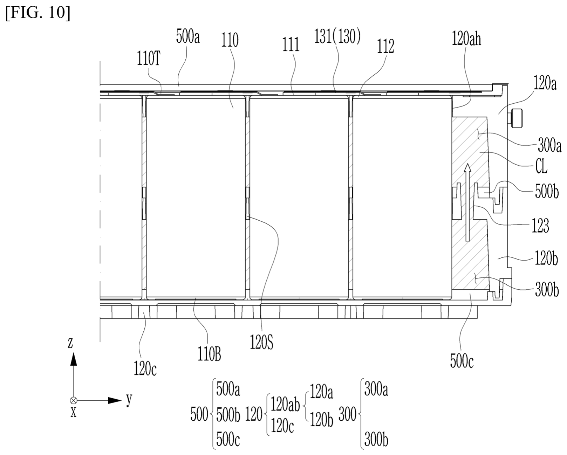

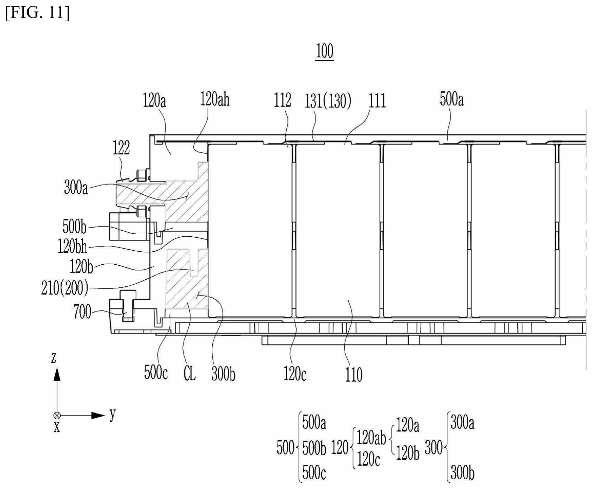

FIG. 7 is a partial perspective view of the battery assembly of FIG. 1. FIG. 8 is a cross-sectional view showing a cross section taken along the cutting line A-A' of FIG. 2. FIG. 9 is a partially enlarged cross-sectional view showing a portion "D" of FIG. 8. FIG. 10 is a partially enlarged cross-sectional view showing a portion "E" of FIG. 8. FIG. 11 is a cross-sectional view showing a cross section taken along the cutting line B-B' of FIG. 2.

Referring to FIGS. 1 to 3 and 7 to 11 together, as described above, the battery assembly 100 includes a cell frame 120 in which the battery cells 110 are stored, and the inside of the cell frame 120 is provided with a cooling flow path 300 through which a coolant CL flows while being in direct contact with at least a part of the battery cells 110.

The coolant CL may circulate inside the cell frame 120 while being in direct contact with the battery cells 110. The cell frame 120 can include an inlet port 121 through which the coolant CL flows into the inside of the cell frame 120 and an outlet port 122 through which the coolant is discharged to the outside of the cell frame 120. The coolant CL flowing into the inlet port 121 may flow along the cooling flow paths 300 and then be discharged through the outlet port 122. That is, the coolant CL flows into the inside of the cell frame 120 through the inlet port 121, and the flowed-in coolant CL flows along the cooling flow paths 300 of the cell frame 120 and comes into direct contact with the battery cells 110. The coolant CL can then be discharged to the outside of the cell frame 120 through the outlet port 122.

According to this embodiment, a cooling flow path 300 through which the coolant CL flows may be provided inside the cell frame 120. This cooling flow path 300 may have a multi-layer cooling structure, and the multi-layer cooling structure will be described below.

The cooling flow path 300 includes a plurality of cooling flow paths 300a, 300b arranged along the longitudinal direction of the battery cell 110 in which the battery cell 110 extends. The flow direction of the coolant CL in any one of the plurality of cooling flow paths 300a, 300b and the flow direction of the coolant CL in the other of the plurality of cooling flow paths 300a, 300b are opposite to each other. Further, the directions in which the coolant CL flows in the plurality of cooling flow paths 300a, 300b may be perpendicular to the longitudinal direction of the battery cell 110.

The longitudinal direction of the battery cell 110 in which the battery cell 110 extends refers to a direction parallel to the width direction of a portion that extends relatively long in the battery cell 110. In one embodiment, as shown in FIGS. 9 to 11, the battery cell 110 extends such that its width in the z-axis direction is longer than its width in the y-axis direction, wherein the longitudinal direction of the battery cell 110 corresponds to a direction parallel to the z-axis direction.

The longitudinal direction of the battery cell 110 according to this embodiment may be a direction between one surface of the battery cell 110 and the other surface facing the one surface. At least one of the electrode terminals 111, 112 of the battery cell 110 may be located on the one surface of the battery cell 110. For example, as shown in FIGS. 9 to 11, the one surface and the other surface of the battery cell 110 may be the upper surface 110T of the battery cell 110 and the lower surface 110B of the battery cell 110, respectively. At least one of the electrode terminals 111, 112 of the battery cell 110 may be located on the upper surface 110T of the battery cell 110. In FIGS. 9 to 11, it is shown that all of the electrode terminals 111, 112 of the battery cell 110 are located on the upper surface 110T of the battery cell 110. As shown in FIGS. 9 to 11, the longitudinal direction of the battery cell 110 may be a direction between the upper surface 110T of the battery cell 110 and the lower surface 110B of the battery cell 110, and the longitudinal direction of the battery cell 110 may be a direction parallel to the z-axis direction.

As described above, the longitudinal direction of the battery cell 110 refers to a direction parallel to the width direction of a portion that extends relatively long in the battery cell 110, wherein the plurality of cooling flow paths 300a, 300b are arranged along the longitudinal direction, which is the width direction of a portion where the battery cell 110 extends relatively long.

In one embodiment, the plurality of cooling flow paths 300a, 300b may include a first cooling flow path 300a and a second cooling flow path 300b. The first cooling flow path 300a and the second cooling flow path 300b may be arranged along the z-axis direction corresponding to the longitudinal direction of the battery cell 110. The first cooling flow path 300a may be located above the second cooling flow path 300b on the basis of the z-axis direction, and the second cooling flow path 300b may be located below the first cooling flow path 300a on the basis of the z-axis direction.

According to this embodiment, the cooling flow path 300 through which the coolant CL flows inside the cell frame 120 may have a multi-layer cooling structure. Specifically, the first cooling flow path 300a and the second cooling flow path 300b may be sequentially located along the longitudinal direction of the battery cell 110. The multi-layer cooling structure of the cooling flow path 300 mentioned herein means that layered cooling flow paths that are portioned from each other are realized based on the longitudinal direction of the battery cell 110.

Based on any one point of the battery cell 110 along the longitudinal direction of the battery cell 110, a portion of the battery cell 110 below that point may be immersed in the second cooling flow path 300b, and a portion of the battery cell 110 above that point may be immersed in the first cooling flow path 300a.

As described above, the flow direction of the coolant CL in any one of the plurality of cooling flow paths 300a, 300b and the flow direction of the coolant CL in the other of the plurality of cooling flow paths 300a, 300b are opposite to each other. That is, the flow direction of the coolant CL in the first cooling flow path 300a and the flow direction of the coolant CL in the second cooling flow path 300b may be opposite to each other.

Any one of the plurality of cooling flow paths 300a, 300b may be connected to the inlet port 121, and the other of the plurality of cooling flow paths 300a, 300b may be connected to the outlet port 122. For example, the second cooling flow path 300b may be connected to the inlet port 121, and the first cooling flow path 300a may be connected to the outlet port 122. Further, as shown in FIG. 10, the cell frame 120 may include a connection hole 123 that connects the plurality of cooling flow paths 300a, 300b. The connection hole 123 according to one embodiment may connect the first cooling flow path 300a and the second cooling flow path 300b. The coolant CL may flow in through the inlet port 121 and then flow along the second cooling flow path 300b. The coolant CL flowing-in along the second cooling flow path 300b may flow into the first cooling flow path 300a through the connection hole 123. The coolant CL flowing along the first cooling flow path 300a may be discharged to the outside of the cell frame 120 through the outlet port 122.

It is preferable that the first cooling flow path 300a and the second cooling flow path 300b are not connected to each other until the coolant CL reaches the connection hole 123. That is, the first cooling flow path 300a and the second cooling flow path 300b may be connected to each other only through the connection hole 123. The direction in which the coolant CL flows in the first cooling flow path 300a and the direction in which the coolant CL flows in the second cooling flow path 300b may be opposite to each other. For example, the coolant CL may flow along the +y-axis direction in the second cooling flow path 300b connected to the inlet port 121, and the coolant CL may flow along the -y-axis direction in the first cooling flow path 300a connected to the outlet port 122.

Meanwhile, in the drawings, the cooling flow path 300 is depicted as having a two-layer cooling structure including a first cooling flow path 300a and a second cooling flow path 300b, but the number of the cooling flow paths is not particularly limited, and a cooling structure of three or more layers is also possible. That is, the cooling flow path according to other embodiments of the present disclosure may further include a third cooling flow path in addition to the first and second cooling flow paths along the longitudinal direction of the battery cell 110. In addition, the cooling flow path may include a fourth cooling flow path as necessary.

The following describes the reason why the cooling flow path 300 according to this embodiment has a multi-layer cooling structure.

If the cooling flow path is formed in a single layer and the coolant CL flows in only one direction, a difference appears in the order in which the coolant CL comes into contact with the plurality of battery cells 110, which may result in cooling imbalances for each battery cell 110. As a comparative example of the present disclosure, a single-layer cooling flow path in which the coolant CL flows in only one direction may be considered. In this comparative example, the battery cell adjacent to the inlet port is in direct contact with the coolant CL, so that heat dissipation is performed excellently, but the battery cell adjacent to the outlet port is in contact with the coolant CL that has already been heated by the battery cells, so that heat dissipation is not performed excellently. Therefore, a cooling imbalance occurs for each battery cell 110, which may lead to a decrease in the performance of the entire battery assembly.

On the other hand, the present embodiment having a cooling flow path 300 of a multi-layer cooling structure can greatly reduce the cooling deviation between the battery cells 110. The core of this multi-layer cooling structure is to make a time difference in the portion that is in contact with the coolant CL for each portion of the battery cells 110 through a multi-layer cooling structure in which the flow directions of the coolant CL are opposite to each other. Referring again to FIGS. 9 and 11, in the case of the battery cell 110 closest to the inlet port 121 and the outlet port 122 (the battery cell located on the leftmost side in FIGS. 9 and 11), the portion of the battery cell 110 located in the second cooling flow path 300b comes into contact with the coolant CL firstly, and the portion of the battery cell 110 located in the first cooling flow path 300a comes into contact with the coolant CL lastly. That is, in the case of the battery cell 110 closest to the inlet port 121 and the outlet port 122, a portion of the battery cell 110 may be in contact with the coolant CL in the coldest state, and other portions of the battery cell 110 may be in contact with the coolant CL in the hottest state. On the other hand, in the case of the battery cell 110 located farthest from the inlet port 121 and outlet port 122 and closest to the connection hole 123 (the battery cell located on the rightmost side in FIG. 10), the portion of the battery cell 110 located in the second cooling flow path 300b comes into contact with the coolant CL relatively slowly, but this coolant CL can immediately pass through the connection hole 123 and come into contact with the portion of the battery cell 110 located in the first cooling flow path 300a. That is, in the case of the battery cell 110 located closest to the connection hole 123, it can be interpreted that all portions of the battery cell 110 are in contact with the coolant CL at an intermediate temperature.

When viewed based on one battery cell 110, a thermal balance can be achieved through heat transfer even between the portion in contact with the first cooling flow path 300a and the portion in contact with the second cooling flow path 300b. In conclusion, the battery cell 110 closest to the inlet port 121 and the outlet port 122 (the battery cell located at the leftmost side in FIGS. 9 and 11) and the battery cell 110 located farthest from the inlet port 121 and the outlet port 122 and located closest to the connection hole 123 (the battery cell located on the rightmost side in FIG. 10) can be cooled to a similar extent.

In this way, by realizing the cooling flow path 300 with a multi-layer cooling structure, it is possible to make a difference in the order of contact with the coolant CL for each portion of the multiple battery cells 110. Therefore, it is possible to solve the problem of cooling imbalance between the battery cells 110 and thus minimize the cooling deviation between the battery cells. If the temperature deviation between the battery cells 110 is minimized, it is possible to prevent deterioration of a specific battery cell 110 over a long-term charge/discharge cycle, thereby extending the life of the battery assembly and the battery pack including the same, and ensuring the safety. Meanwhile, certain other embodiments of the present disclosure may have a multi-layer cooling structure such as a three-layer or four-layer cooling structure in addition to a two-layer cooling structure in order to eliminate the cooling deviation between the battery cells 110 as described above.

Meanwhile, based on the positions of the battery cells 110, the inlet port 121 and the outlet port 122 may be located on the same side, and the connection hole 123 may be located on the opposite side to the place where the inlet port 121 and the outlet port 122 are located. However, this is one exemplary structure, and the positions of the inlet port 121, the outlet port 122, and the connection hole 123 are not particularly limited.

Meanwhile, the cell frame 120 according to this embodiment may include a separation part 120S for realizing the cooling flow path 300 into a plurality of cooling flow paths 300a, 300b arranged along the longitudinal direction of the battery cell 110. The cooling flow path 300 may be divided into a plurality of cooling flow paths 300a, 300b by the separation part 120S inside the cell frame 120.

The plurality of cooling flow paths 300a, 300b are divided from each other by the separation part 120S, and the coolants CL do not mix with each other. As described above, the cooling flow paths 300a, 300b can be connected to each other only through the connection hole 123. The connection hole 123 can be provided in the separation part 120S.

In one embodiment, the cell frame 120 may include a separation part 120S that partitions a first cooling flow path 300a and a second cooling flow path 300b and is located between the first cooling flow path 300a and the second cooling flow path 300b. The first cooling flow path 300a and the second cooling flow path 300b are partitioned from each other by the separation part 120S and may be connected to each other only through the connection hole 123.

The separation part 120S is not particularly limited by its shape, thickness, material, etc., as long as it can partition the plurality of cooling flow path 300a, 300b. In one embodiment, in FIGS. 9 to 11, it is shown that the separation part 120S has a form included in the middle cell frame 120b of the cover cell frame 120ab described later.

Meanwhile, the coolant CL according to this embodiment may be a fluid as a cooling medium. Since the coolant CL is in direct contact with the battery cells 110 within the battery assembly 100, the coolant CL can be electrically insulated. The coolant CL may be a material having insulating properties. In one embodiment, the coolant CL may be an insulating oil. However, in the case of the battery assembly 100 according to this embodiment, since the coolant CL is prevented from leaking to the outside of the top cell frame 120a described later, general cooling water may also be applied as the coolant CL.

Referring to FIGS. 1 to 3 and FIGS. 7 to 11 together, the cell frame 120 may include a bottom cell frame 120c on which battery cells 110 are seated, and a cover cell frame 120ab located on the bottom cell frame 120c. The cover cell frame 120ab may include a top cell frame 120a and a middle cell frame 120b.

The bottom cell frame 120c and the cover cell frame 120ab are assembled to form an internal space, the battery cells 110 may be located in the internal space formed by the bottom cell frame 120c and the cover cell frame 120ab, and the coolant CL may also circulate along the internal space to form a cooling flow path 300.

The inlet port 121 and the outlet port 122 may be located on the same side to each other in the cell frame 120, or may be located on opposite sides to each other. That is, the positions of the inlet port 121 and the outlet port 122 in the cell frame 120 are not particularly limited. The inlet port 121 and the outlet port 122 may be formed in the cover cell frame 120ab among the cell frames 120.

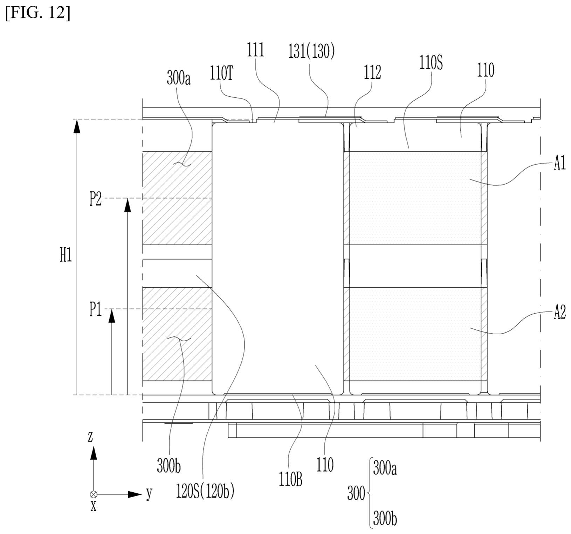

FIG. 12 is a partially enlarged cross-sectional view showing a part of FIG. 9.

Referring to FIGS. 9 to 12 together, the area where at least one cooling flow path 300 made to match with the flow direction of the coolant CL among the plurality of cooling flow paths 300 is in contact with the battery cell 110 may be 30% or more and 70% or less of the area where all of the plurality of cooling flow paths 300 are in contact with the battery cell 110. Further, the area where at least one cooling flow path 300 made to match with the flow direction of the coolant CL among the plurality of cooling flow paths 300 is in contact with the battery cell 110 may be 40% or more and 60% or less of the area where all of the plurality of cooling flow paths 300 are in contact with the battery cell 110.

If the area where at least one cooling flow path 300 made to match with the flow direction of the coolant CL among the plurality of cooling flow paths 300 is in contact with the battery cell 110 may be less than 30% and more than 70% of the area where all of the plurality of cooling flow paths 300 are in contact with the battery cell 110, the area where a specific cooling flow path 300 is in contact with the battery cell 110 may be excessively increased or reduced. In this case, the degree to which the battery cells 110 are cooled for each zone may vary, which may lead to a cooling imbalance between the battery cells 110. As a result, the cooling deviation between the battery cells 110 inside the battery assembly 100 may be increased.

In one embodiment, the cooling flow path 300 shown in FIG. 12 may include a first cooling flow path 300a and a second cooling flow path 300b, and the first cooling flow path 300a and the second cooling flow path 300b have opposite coolant flow directions to each other.

From the perspective of the first cooling flow path 300a, the cooling flow path 300 made to match with the flow direction of the coolant CL among the plurality of cooling flow paths 300 is one of the first cooling flow paths 300a. Thus, the area A1 where the first cooling flow path 300a is in contact with the battery cell 110 may be 30% or more and 70% or less of the areas A1, A2 where the first cooling flow path 300a and the second cooling flow path 300b, which are all of the plurality of cooling flow paths 300, are in contact with the battery cell 110.

From the perspective of the second cooling flow path 300b, the cooling flow path 300 made to match with the flow direction of the coolant CL among the plurality of cooling flow paths 300 is one of the second cooling flow paths 300b. Thus, the area A2 where the second cooling flow path 300b is in contact with the battery cell 110 may be 30% or more and 70% or less of the areas A1, A2 where the first cooling flow path 300a and the second cooling flow path 300b, which are all of the plurality of cooling flow paths 300, are in contact with the battery cell 110.

Referring again to FIGS. 9 to 12, the cell frame 120 may include a separation part 120S for realizing the cooling flow path 300 into a plurality of cooling flow paths 300a, 300b arranged along the longitudinal direction of the battery cell 110.

In one embodiment, the cell frame 120 may include a separation part 120S that partitions the first cooling flow path 300a and the second cooling flow path 300b and is located between the first cooling flow path 300a and the second cooling flow path 300b.

Based on the longitudinal direction of the battery cell 110, the separation part 120S may be located in a space between the 30% point P1 of the height H1 of the battery cell 110 and the 70% point P2 of the height H1 of the battery cell 110. The longitudinal direction of the battery cell 110 may be a direction parallel to the z-axis in the direction between the upper surface 110T of the battery cell 110 and the lower surface 110B of the battery cell 110. The height H1 of the battery cell 110 may correspond to the length from the lower surface 110B of the battery cell 110 to the upper surface 110T of the battery cell 110. In FIG. 12, it is shown that the separation part 120S provided on the middle cell frame 120b described later is located in the space between the 30% point P1 of the height H1 of the battery cell 110 and the 70% point P2 of the height H1 of the battery cell 110.

If the separation part 120S is located in a space that is not between the 30% point P1 of the height H1 of the battery cell 110 and the 70% point P2 of the height H1 of the battery cell 110 based on the longitudinal direction of the battery cell 110, the area where any one of the plurality of cooling flow paths 300a, 300b is in contact with the battery cell 110 may be excessively increased or reduced. In this case, the degree to which the battery cells 110 are cooled for each zone may vary, which may lead to a cooling imbalance between the battery cells 110. As a result, the cooling deviation between the battery cells 110 inside the battery assembly 100 may be increased.

The following specifically describes a distribution mechanism provided in a battery assembly according to an embodiment of the present disclosure.

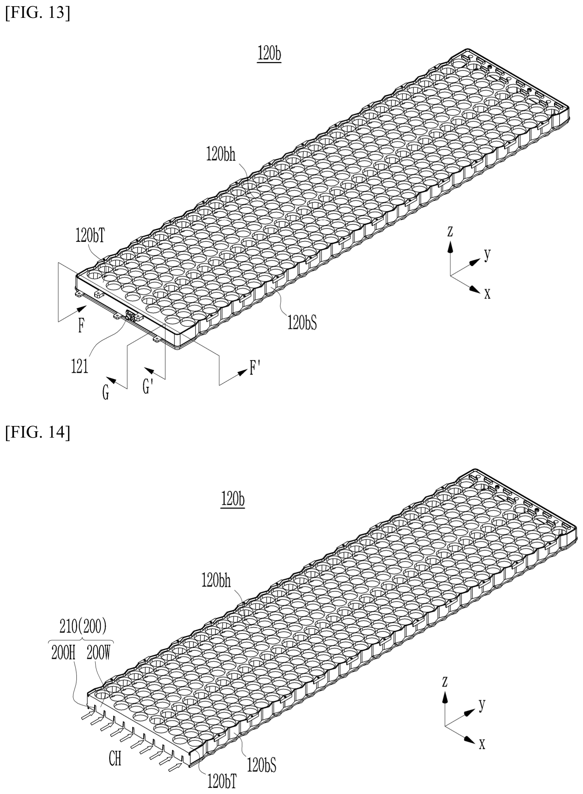

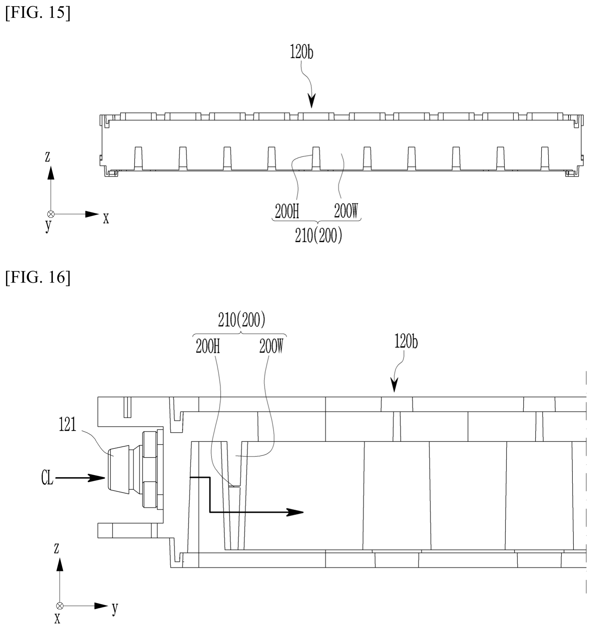

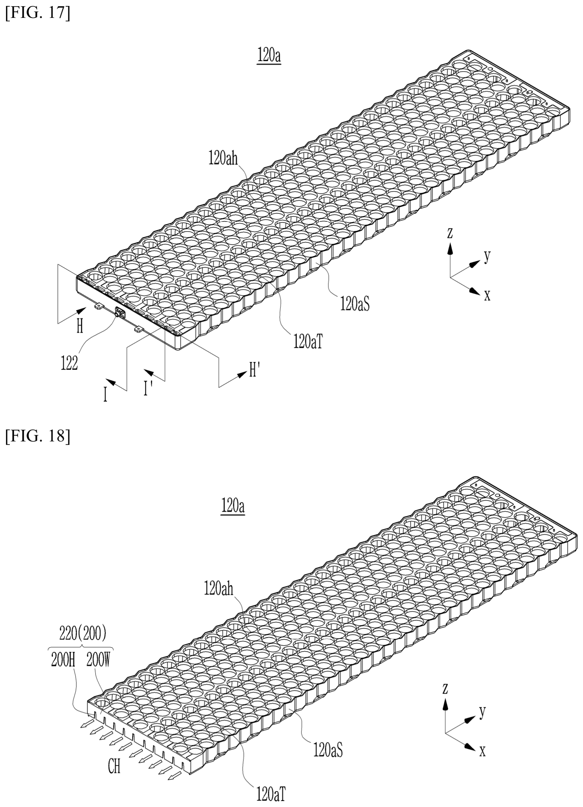

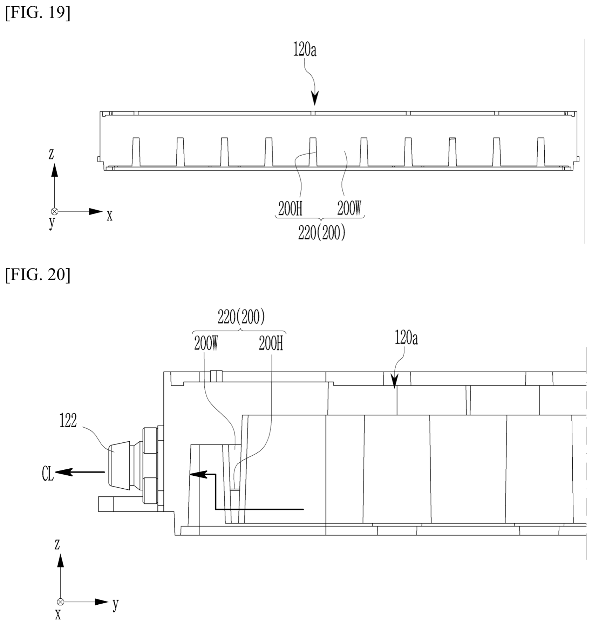

FIG. 13 is a perspective view of a middle cell frame according to an embodiment of the present disclosure. FIG. 14 is a cross-sectional perspective view showing a cross section taken along the cutting line F-F' of FIG. 13. FIG. 15 is a front view of the middle cell frame of Fig. 14 as viewed from the front. FIG. 16 is a cross-sectional view showing a cross section taken along the cutting line G-G' of FIG. 13. FIG. 17 is a perspective view of a top cell frame according to an embodiment of the present disclosure. FIG. 18 is a cross-sectional perspective view showing a cross section taken along the cutting line H-H' of FIG. 17. FIG. 19 is a front view of the top cell frame of FIG. 18 as viewed from the front. FIG. 20 is a cross-sectional view taken along the cutting line I-I' of FIG. 17.

Referring to FIGS. 1, 7, 9 and 13 to 20, the cell frame 120 may include an inlet port 121 through which the coolant CL flows into the inside of the cell frame 120 and an outlet port 122 through which the coolant CL is discharged to the outside of the cell frame 120. In the battery assembly 100 according to this embodiment, at least one of the inlet port 121 or the outlet port 122 may be provided with a distribution mechanism 200 that divides the coolant CL into a plurality of cooling channels CH. In an embodiment of the present disclosure, distribution mechanisms 200 may be provided in each of the inlet port 121 and the outlet port 122. In other embodiments of the present disclosure, a distribution mechanism 200 may be provided in either the inlet port 121 or the outlet port 122.

The distribution mechanism 200 may include a plurality of distribution holes 200H. The distribution mechanism 200 may include a partition wall 200W in which a plurality of distribution holes 200H are formed. The distribution holes 200H may be arranged at prescribed intervals along the direction in which the partition wall 200W extends (a direction parallel to the x-axis).

The coolant CL flowing into the inlet port 121 may flow inside the cell frame 120 while being divided into a plurality of cooling channels CH through the distribution mechanism 200 provided in the inlet port 121. Specifically, the coolant CL flowing into the inlet port 121 can be distributed into a plurality of cooling channels CH while passing through the distribution holes 200H of the distribution mechanism 200 provided in the inlet port 121.

The coolant CL distributed into the plurality of cooling channels CH may flow along the inside of the cell frame 120, then pass through the distribution mechanism 200 provided in the outlet port 122, and finally be discharged to the outside of the cell frame 120 through the outlet port 122. Specifically, the coolant CL distributed into the cooling channels CH may flow while being in contact with the battery cells 110, then pass through the distribution holes 200H of the distribution mechanism 200 provided in the outlet port 122, and be discharged through the outlet port 122. The cooling flow path 300 may be in a state of being distributed into the cooling channels CH.

As the battery assembly 100 is increased in size, the number of battery cells 110 included therein increases, and the number of components required for the battery assembly 100 increases. Thus, when applying the immersion cooling system, there is a problem that deviations in the flow velocity of the coolant occur for each zone, and the coolant does not flow uniformly when viewing it on the whole. In this case, the degree to which each battery cell is cooled by the coolant varies, resulting in cooling deviations between the battery cells 110, which may lead to a decrease in the cooling efficiency of the entire battery assembly 100. A decrease in the cooling efficiency of the battery assembly can cause a decrease in the performance of the battery assembly and a safety problem.

In the present disclosure, a distribution mechanism 200 that divides the coolant CL into a plurality of cooling channels CH is provided in at least one of the inlet port 121 and the outlet port 122, thereby improving the cooling efficiency of the battery cells 110 inside the battery assembly 100. Specifically, the coolant CL flowing-in through the inlet port 121 does not immediately enter the space where the battery cells 110 are located, but can flow into the space where the battery cells 110 are located while being distributed through the distribution hole 200H. Since the coolant CL is distributed into a plurality of cooling channels CH through the distribution mechanism 200 and flows inside the battery assembly 100, the coolant CL is not concentrated in only some of the multiple battery cells 110, but the flow velocity of the coolant CL may be wholly uniformly distributed inside the battery assembly 100. Therefore, the coolant CL can wholly uniformly flow inside the battery assembly 100, and the flow velocity of the coolant CL can be maintained constant for each zone. Thereby, the entire battery cells 110 can be uniformly cooled, thereby minimizing the cooling deviation between the battery cells 110 and improving the cooling efficiency of the entire battery assembly 100.

The distribution mechanism 200 according to this embodiment may include an inlet distribution mechanism 210 provided adjacent to the inlet port 121 among the inlet port 121 and the outlet port 122. The distribution mechanism 200 may include an outlet distribution mechanism 220 provided adjacent to the outlet port 122 among the inlet port 121 and the outlet port 122. The inlet distribution mechanism 210 may correspond to the distribution mechanism 200 provided in the inlet port 121 described above, and the outlet distribution mechanism 220 may correspond to the distribution mechanism 200 provided in the outlet port 122 described above. An exemplary structure of the inlet distribution mechanism 210 is shown in FIGS. 13 to 16, and an exemplary structure of the outlet distribution mechanism 220 is shown in FIGS. 17 to 20.

Each of the inlet distribution mechanism 210 and the outlet distribution mechanism 220 may include a plurality of distribution holes 200H. Each of the inlet distribution mechanism 210 and the outlet distribution mechanism 220 may include a partition wall 200W in which a plurality of distribution holes 200H are formed.

Reviewing the positions of the inlet distribution mechanism 210 and the outlet distribution mechanism 220, the inlet distribution mechanism 210 can be located between the inlet port 121 and the battery cells 110. The outlet distribution mechanism 220 may be located between the outlet port 122 and the battery cells 110. The coolant CL flowing into the inlet port 121 may flow inside the cell frame 120 while being divided into a plurality of cooling channels CH through the distribution holes 200H of the inlet distribution mechanism 210. While the plurality of cooling channels CH are in contact with the battery cells 110, the coolant may flow inside the cell frame 120, then pass through the distribution holes 200H of the outlet distribution mechanism 220, and finally be discharged to the outside of the cell frame 120 through the outlet port 122.

In this embodiment, the inlet port 121 may be formed in the middle cell frame 120b among the cell frames 120, and thus, the inlet distribution mechanism 210 may also be provided in the middle cell frame 120b. Additionally, the outlet port 122 may be formed in the top cell frame 120a among the cell frames 120, and thus, the outlet distribution mechanism 220 may also be formed in the top cell frame 120a. However, this is an exemplary structure, and the positions of the inlet port 121, the outlet port 122, the inlet distribution mechanism 210, and the outlet distribution mechanism 220 within the cell frame 120 are not particularly limited. In certain other embodiments of the present disclosure, the middle cell frame 120b and the top cell frame 120a may be one integrally molded part, and even in that case, the inlet port 121, the outlet port 122, the inlet distribution mechanism 210, and the outlet distribution mechanism 220 may be located without any particular limitation.

The inlet distribution mechanism 210 can distribute the coolant CL flowing-in through the inlet port 121 to a plurality of cooling channels CH, while the outlet distribution mechanism 220 does not perform the function of directly distributing the coolant CL to a plurality of cooling channels CH.

However, if the outlet distribution device 220 is not provided, the coolant CL divided into multiple cooling channels CH is discharged immediately through the outlet port 122, but the coolant CL flowing around the battery cell 110 located at a certain distance from the outlet port 122 may stagnate and not flow, or a vortex may be formed so that the coolant CL may not flow properly but stay nearby. In this case, the coolant CL is not discharged properly through the outlet port 122, resulting in a problem of flow loss of the coolant CL and reduction in the cooling efficiency.

Thus, in an embodiment of the present disclosure, not only an inlet distribution mechanism 210 is provided in the inlet port 121 but also an outlet distribution mechanism 220 is provided in the outlet port 122, thereby intending to prevent the problem that the coolant CL stagnates and does not flow or the vortex of the coolant CL is formed. The outlet distribution mechanism 220 does not perform a function to directly distribute the coolant CL into a plurality of cooling channels CH, but induces the plurality of cooling channels CH to be smoothly discharged through the outlet port 122, thereby minimizing the flow loss of the coolant CL and increasing the cooling efficiency.

However, the outlet distribution mechanism 220 is not essentially required in the present disclosure, and not only a battery assembly having both an inlet distribution mechanism 210 and an outlet distribution mechanism 220, but also a battery assembly having only an inlet distribution mechanism 210 can be applied to the present disclosure.

Meanwhile, referring again to FIGS. 8 to 11, in the case of the battery assembly 100 according to this embodiment, since an immersion cooling system, which is a direct cooling using a coolant CL, is applied, a stable waterproof sealed structure is essentially required to prevent the coolant CL from leaking to the outside. If the coolant CL leaks to the outside of the cell frame 120 of the battery assembly 100, the amount of the coolant CL inside the cell frame 120 is insufficient and the coolant CL does not circulate properly, so that the cooling performance may deteriorate. Furthermore, the leaked coolant CL may adversely affect other electrical components other than the battery assembly 100. The cell frame 120 may be in a form in which a cover cell frame 120ab and a bottom cell frame 120c are assembled, and there is a risk that the coolant CL leaks through the gap between them. When the cover cell frame 120ab and the bottom cell frame 120c are assembled, the hook coupling of a groove and a rib can be formed. The hook coupling of the groove and the rib can prevent the coolant CL from leaking through the gap between the cover cell frame 120ab and the bottom cell frame 120c. In addition, the hook coupling of the groove and the rib can also be formed between the top cell frame 120a and the middle cell frame 120b of the cover cell frame 120ab.

In the case of the battery assembly 100 according to this embodiment, the cell frame 120 must be able to withstand the pressure caused by the circulation of the coolant CL inside. The internal pressure caused by the circulation of the coolant CL can increase to a considerable level due to the pressure required for the coolant CL to move from the inlet port 121 to the outlet port 122. If the cell frame 120 cannot withstand the internal pressure caused by the circulation of the coolant CL and is deformed, the coolant CL can easily leak. Therefore, it is an important issue that the cell frame 120 withstands the internal pressure caused by the circulation of the coolant CL. In this embodiment, a sliding-prevention assembly structure can be realized by a hook coupling in which the groove and the rib are alternatively coupled. Thereby, the cell frame 120 can stably withstand the internal pressure caused by the circulation of the coolant CL.

According to this embodiment, a waterproof adhesive 500 may be applied onto the bottom cell frame 120c. At least a part of the waterproof adhesive 500 may be located between the bottom cell frame 120c and the cover cell frame 120ab. The waterproof adhesive 500 is not particularly limited by its material as long as it exhibits waterproof performance and has impact resistance, adhesiveness, electrical insulation properties, and the like. In one embodiment, the waterproof adhesive 500 may include a two-component epoxy-based material in which a hardener is mixed into a base material.

In the present disclosure, the waterproof adhesive 500 applied onto the bottom cell frame 120c is referred to as a third waterproof adhesive 500c. The first and second waterproof adhesives 500a, 500b will be described later.

Further, at least a part of the third waterproof adhesive 500c may be located between the bottom cell frame 120c and the cover cell frame 120ab. The third waterproof adhesive 500c can adhere the bottom cell frame 120c and the cover cell frame 120ab to each other. Further, at least a part of the third waterproof adhesive 500c can prevent the coolant CL from leaking from the gap between the bottom cell frame 120c and the cover cell frame 120ab. Further, the degree of coupling between the bottom cell frame 120c and the cover cell frame 120ab is improved due to the third waterproof adhesive 500c, so that the cell frame 120 can better withstand the internal pressure caused by the circulation of the coolant CL.

Meanwhile, according to this embodiment, a waterproof sealing structure can be realized by providing grooves and ribs and applying the waterproof adhesive 500. Therefore, silicone rubber material parts such as waterproof foam tape, sealant, O-rings, etc. may not be required. Therefore, the manufacturing process of the battery assembly 100 is very simple and the cost is reduced. However, this is only an exemplary example, and additional sealing members such as the foam tape, sealant, O-ring, etc. mentioned above may be provided in the battery assembly as necessary.

Further, the third waterproof adhesive 500c can stably fix the battery cells 110 on the bottom cell frame 120c.

Referring to FIGS. 4, 5 and 8 to 11 together, the third waterproof adhesive 500c may cover the vent part 110V of the battery cell 110. As described above, the vent part 110V corresponds to a member or mechanism provided in the battery cell 110 so as to discharge venting gas and the like inside the battery cell 110. The vent part 110V may be formed on the lower surface of the battery cell 110, and the third waterproof adhesive 500c applied onto the bottom cell frame 120c may cover the vent part 110V. Further, the third waterproof adhesive 500c may cover a partial region adjacent to the lower surface of the battery cell 110 among the side surface of the battery cell 110.

When a thermal event or thermal runaway phenomenon occurs inside the battery cell 110, high-temperature venting gas or particles may be discharged through the opened vent part 110V. Generally, when gas is emitted from the battery cell 110, the electrode plate pieces and active material pieces inside the battery cell 110 may be discharged to the outside in a state of being heated to a high temperature, and these high-temperature particles may appear in the form of sparks. High-temperature venting gas or particles discharged through the vent part 110V can tear the bottom cell frame 120c and be discharged to the outside of the bottom cell frame 120c. Although not specifically shown in the figure, high-temperature venting gas or particles may be discharged to the outside through a separate venting channel provided under the bottom cell frame 120c.

Since the third waterproof adhesive 500c covers the vent part 110V of the battery cell 110 and a partial region adjacent to the lower surface of the battery cell 110 among the side surface of the battery cell 110, the vent part 110V is not exposed. Thereby, even if a thermal runaway due to an abnormality occurs in any one of the battery cells 110, high-temperature venting gas or particles are not transmitted to the surrounding battery cells 110, to prevent chain ignition from occurring.

Further, the venting path of the battery cell 110 and the coolant CL may be separated from each other by the third waterproof adhesive 500c. As described above, an insulating oil can be applied to the coolant CL. Since the insulating oil is an oil based component, it can cause additional thermal runaway, ignition, and explosion when being in contact with the venting gas or particles. The third waterproof adhesive 500c may cover the vent part 110V so that the vent part 110V is not exposed to the coolant CL. The third waterproof adhesive 500c can block the high-temperature venting gas and particles discharged from the vent part 110V of the battery cell 110 from coming into contact with the coolant CL and thus prevent the thermal runaway of the battery cell 110 from leading to ignition or explosion of the entire battery assembly 100.

Referring to FIGS. 3, 4 and 8 to 11 together, the battery assembly 100 according to this embodiment may include a busbar frame assembly 130. The busbar frame assembly may include a busbar frame in which busbars 131 are arranged. The busbar frame assembly may include at least one busbar 131 connected to an electrode terminal. Further, the busbar frame assembly may include a printed circuit board. The printed circuit board is provided to sense voltage data or thermal data of the battery cells 110. In one embodiment, the printed circuit board may be connected to the electrode terminals 111, 112 of the battery cells 110 or the busbar 131. Thereby, the voltage data of each battery cell 110 may be sensed and transmitted to the outside. The busbar frame assembly 130 may electrically connect the battery cells 110 in series or in parallel.

The battery cell 110 may include a first electrode terminal 111 and a second electrode terminal 112 as positive and negative electrode terminals. The first electrode terminal 111 and the second electrode terminal 112 of the battery cell 110 may be provided on the upper surface 110T of the battery cell 110. However, the positions of the first electrode terminal 111 and the second electrode terminal 112 in the battery cell 110 is a part that can vary depending on the design, and are not necessarily limited to the upper surface of the battery cell 110. The electrical connection between the battery cells 110 may be made by a busbar 131 that connects the first electrode terminal 111 and the second electrode terminal 112. In one embodiment, the busbar 131 can electrically connect the first electrode terminal 111 of one battery cell 110 to the second electrode terminal 112 of another battery cell 110. A high voltage (HV) connection between the battery cells 110 can be realized in this manner. The HV connection is a connection that serves as a power source to supply power that requires high voltage, and means an electrical connection between battery cells or an electrical connection between a battery pack and a device.

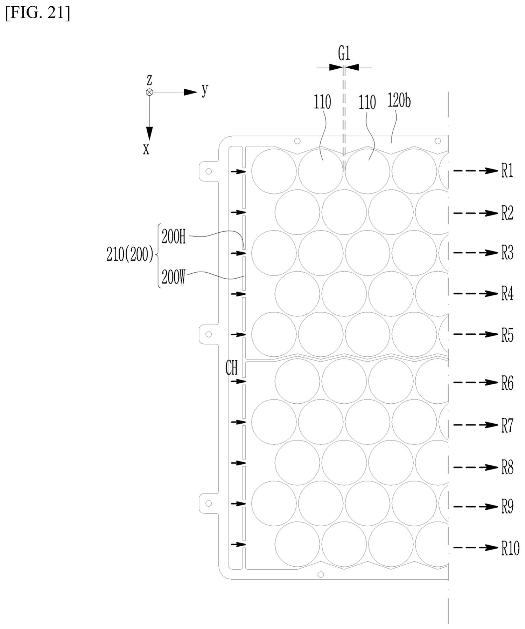

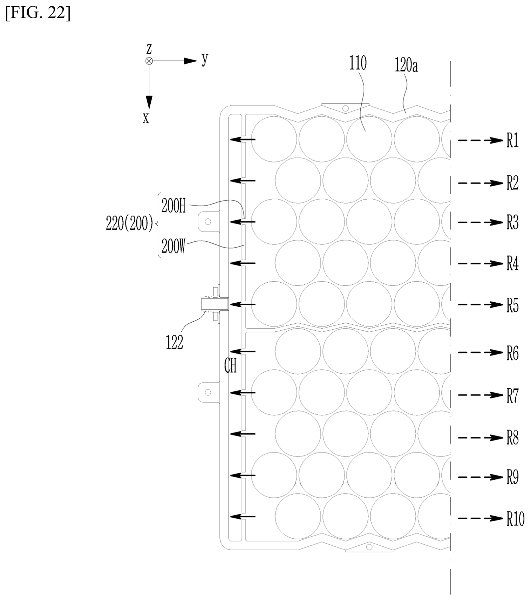

FIG. 21 is a cross-sectional view showing the relationship between the inlet distribution mechanism and the battery cells according to an embodiment of the present disclosure. FIG. 22 is a cross-sectional view showing the relationship between the outlet distribution mechanism and the battery cells according to an embodiment of the present disclosure.

Referring to FIGS. 13 to 22 together, in the battery assembly 100 according to this embodiment, the battery cells 110 may be arranged to have a plurality of rows R1-R10. FIGS. 21 and 22 shows a state in which the battery cells 110 are arranged to form 10 rows R1-R10. The rows R1-R10 in which the battery cells 110 are arranged may be located in sequence along a direction perpendicular to the direction in which the coolant CL flows. Further, the battery cells 110 within each row R1-R10 may be arranged along the direction in which the coolant CL flows. The direction in which the coolant CL flows is parallel to the y-axis, and each row R1-R10 may be located in sequence along a direction parallel to the x-axis. Further, the battery cells 110 within one row R1-R10 may be located along a direction parallel to the y-axis.

Any one of the plurality of cooling channels CH divided by the distribution mechanism 200 may be provided to correspond to any one of the rows R1 to R10 of the battery cells 110. Here, corresponding means that there exists a portion where one of the cooling channels CH overlaps with any one of the rows R1-R10 of the battery cells 110, and the position of the cooling channel CH does not necessarily have to correspond to the center of any one of the rows R1-R10 of the battery cells 110.

As shown in FIG. 21, the coolant flowing into the inlet port 121 is distributed into a plurality of cooling channels CH by a plurality of distribution holes 200H provided in the partition wall 200W in the inlet distribution mechanism 210, wherein any one of the plurality of cooling channels CH may correspond to any one of the rows R1-R10 of the battery cells 110. As shown in FIG. 22, the plurality of cooling channels CH pass through a plurality of distribution holes 200H provided in the partition wall 200W in the outlet distribution mechanism 220, respectively, and are then discharged through the outlet port 122, wherein any one of the plurality of cooling channels CH may correspond to any one of the rows R1-R10 of the battery cells 110.

Since the cooling channels CH distributed by the distribution mechanism 200 correspond to any one of the rows R1-R10 of the battery cells 110, the coolant CL is not concentrated on only some of the battery cells 110, but the flow velocity of the coolant CL can be uniformly distributed into each row R1-R10 of the battery cells 110 and between them. This makes it possible to uniformly cool the entire battery cells 110, minimize the cooling deviation between the battery cells 110, and improve the cooling efficiency of the entire battery assembly 100.

Meanwhile, the plurality of cooling channels CH divided by the distribution mechanism 200 can correspond one to one to each of the rows R1-R10 of the battery cells 110. The number of cooling channels CH may be equal to the number of the rows R1-R10 of the battery cells 110, and one cooling channel CH may correspond to one row of battery cells 110. As described above, corresponding here means that there exists a portion where one of the cooling channels CH overlaps with any one of the rows R1-R10 of the battery cells 110, and the position of the cooling channel CH) does not necessarily have to correspond to the center of any one of the rows R1-R10 of battery cells 110. The distribution holes 200H formed in the partition wall 200W may also correspond one to one to each of the rows R1-R10 of the battery cells 110, and the number of distribution holes 200H may be equal to the number of each of the rows R1-R10 of the battery cells 110, and one distribution hole 200H may correspond to one row of the battery cells 110.

Referring to FIG. 21, it is shown that the battery cells 110 form 10 rows R1-R10, and the distribution holes 200H of the inlet distribution mechanism 210 and the cooling channels CH formed thereby are each provided into 10 channels. Referring to FIG. 22, it is shown that the battery cells 110 form 10 rows R1-R10, and the distribution holes 200H of the outlet distribution mechanism 220 and the cooling channels CH flowing therein are each provided into 10 channels.

The cooling channels CH are realized to correspond one to one with each row R1-R10 of the battery cells 110, so that the coolant CL is not concentrated on only some of the battery cells 110, but the flow velocity of the coolant CL can be uniformly distributed into each row R1-R10 of the battery cells 110 and between them. Therefore, the uniform flow of the coolant CL is possible for all rows R1-R10 of the battery cells 110, and the flow velocity of the coolant CL in all the rows R1-R10 of the battery cells 110 can be maintained constant. This makes it possible to uniformly cool the entire battery cells 110, minimize cooling deviations between the battery cells 110 and improve cooling efficiency of the entire battery assembly 100.

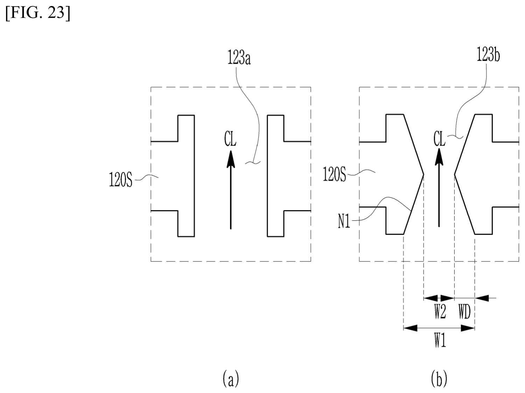

FIGS. 23(a) and (b) are diagrams showing various shapes of connection holes according to embodiments of the present disclosure.

Referring to FIGS. 10 and 23 together, the cell frame 120 may include a connection hole 123 that connects a plurality of cooling flow paths 300. The connection holes 123 may be in the form of holes formed in the separation part 120S of the cell frame 120.

As the battery assembly 100 is increased in size, the number of the battery cells 110 included therein increases, and thereby, the path through which the coolant CL flows becomes longer. That is, as the battery assembly 100 is increased in size, the length of the cooling flow path 300 through which the coolant CL flows may be increased. As the length of the cooling flow path 300 is increased, the difference in pressure for circulating the coolant CL may be increased. In other words, the pressure for circulating the coolant CL decreases as it approaches the outlet port 122, and the pressure drop of the coolant CL increases depending on the length of the cooling flow path 300. The speed of the coolant CL also slows down as it approaches the outlet port 122. The pressure difference of the coolant CL depending on the length of the cooling flow path 300 may cause a cooling deviation between the battery cells 110 and a decrease in the cooling efficiency of the entire battery assembly 100.

In order to solve the above problem, the cooling flow paths 300 may be designed to be connected through the hole-shaped connection hole 123 formed in the separation part 120S of the cell frame 120. Specifically, the hole-shaped connection hole 123 was prepared to utilize Bernoulli's theorem.

Bernoulli's theorem is a law that quantitatively expresses the relationship between the velocity, pressure, and height at which a fluid flows, and utilizes the property that the sum of the potential energy and kinetic energy of a fluid is always constant. According to Bernoulli's theorem, the velocity of a fluid increases when it passes through a narrow passage and decreases when it passes through a wide passage.

When the coolant CL passes through the hole-shaped connection hole 123 formed in the separation part 120S of the cell frame 120 in order to move between the cooling flow paths 300, it corresponds to the case where the coolant CL suddenly flows into a narrow passage. According to Bernoulli's theorem, when the coolant CL passes through the connection hole 123, the speed is increased. That is, when the coolant CL passes through the connection hole 123 from the second cooling flow path 300b to the first cooling flow path 300a, the speed is increased, thereby capable of maintaining the speed of the coolant CL in the first cooling flow path 300a quickly, and optimizing the pressure drop of the coolant CL.

As shown in FIG. 23(a), in the case of the connection hole 123a according to an embodiment of the present disclosure, the width of the space through which the coolant CL flows may be constant. As shown in FIG. 23(b), in the case of the connection hole 123b according to another embodiment of the present disclosure, the width of the space through which the coolant CL flows may have a region N1 in which the width of the space is narrowed. In one embodiment, the width of the space where the coolant CL flows in the connection hole 123b may be narrowed and then widen again. In the case of the connection hole 123b having a region N1 where the width of the space where the coolant CL flows is narrowed, the effect of increasing the flow velocity according to Bernoulli's theorem can be further maximized.

Referring to FIG. 21 and FIG. 23(b) together, in the connection hole 123b having a region N1 where the width of the space where the coolant CL flows is narrowed, the width difference WD between the widest part W1 of the space where the coolant CL flows and the narrowest part W2 of the space where the coolant CL flows may be 1.0 mm or more, and may be 5 times or less of the gap G1 (see FIG. 21) between the battery cells 110. In one embodiment, as described later, the gap G1 between the battery cells 110 may be 1.5 mm or more and 2.5 mm or less. The width difference WD may be 1.0 mm or more and 12.5 mm or less.

If the width difference WD is less than 1.0 mm, the effect of increasing the flow velocity as the coolant CL passes through the connection hole 123b may be insignificant. If the width difference WD is more than 5 times the gap G1 between the battery cells 110, the narrowest part W2 of the space where the coolant CL flows may be too narrow, which may hinder the flow of the coolant CL.

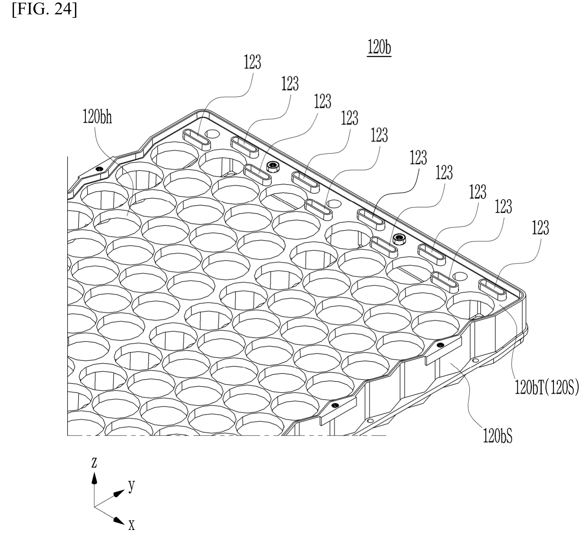

FIG. 24 is a partially enlarged perspective view showing a part of a middle cell frame according to an embodiment of the present disclosure.

Referring to FIGS. 10, 21, 22 and 24, in the multi-layer cooling structure, the connection holes 123 connecting between the cooling flow paths 300 may correspond one to one to the cooling channels CH distributed by the distribution mechanism 200. The connection holes 123 are arranged to correspond one to one to the cooling channels CH, so that the cooling channels CH can be maintained in both the first cooling flow path 300a and the second cooling flow path 300b. That is, while the coolant CL flows from the second cooling flow path 300b to the first cooling flow path 300a, the plurality of cooling channels CH in the second cooling flow path 300b can be maintained in the first cooling flow path 300a. In one embodiment, FIG. 24 shows that 10 connection holes 123 are provided so that the number of the battery cells 110 correspond to the number of 10 rows R1-R10. The ten connection holes 123 may be provided in the middle cell frame 120b of the cell frame 120.

Referring again to FIG. 21, in the battery assembly according to an embodiment of the present disclosure, the gap G1 between the battery cells 110 may be 1.5 mm or more and 2.5 mm or less. This may be the optimal gap G1 for circulating the coolant. If the gap G1 between the battery cells 110 is less than 1.5 mm, the flow velocity of the coolant may be relatively increased, but there may be a problem in that the cooling efficiency may decrease, and the differential pressure increases. Further, if the gap G1 between the battery cells 110 is more than 2.5 mm, there may be a problem in that the flow velocity of the coolant may be relatively decreased, but the cooling efficiency may be decreased.

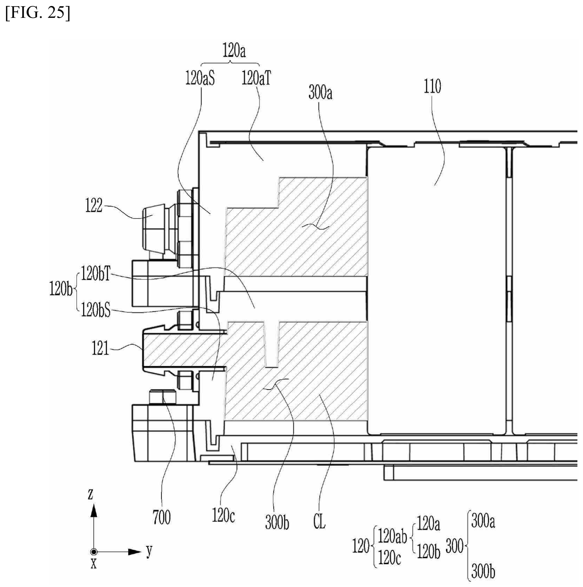

FIG. 25 is a cross-sectional view of a battery assembly according to an embodiment of the present disclosure.

Referring to FIGS. 3, 13, 17 and 25 together, the cell frame 120 may include a bottom cell frame 120c on which the battery cells 110 are mounted, and a cover cell frame 120ab located on the bottom cell frame 120c. A cooling flow path 300 may be provided in the space between the bottom cell frame 120c and the cover cell frame 120ab.

The cover cell frame 120ab may include a middle cell frame 120b and a top cell frame 120a located on the middle cell frame 120b. The top cell frame 120a and the middle cell frame 120b according to this embodiment may be an exemplary structure for realizing a cooling flow path 300 having a multi-layer cooling structure.

The space between the middle cell frame 120b and the bottom cell frame 120c and the space between the top cell frame 120a and the middle cell frame 120b may each correspond to the cooling flow paths 300. For example, the space between the middle cell frame 120b and the bottom cell frame 120c may be a second cooling flow path 300b, and the space between the top cell frame 120a and the middle cell frame 120b may be a first cooling flow path 300a. The inlet port 121 may be provided in the middle cell frame 120b, and the outlet port 122 may be provided in the top cell frame 120a.

Each of the middle cell frame 120b and the top cell frame 120a may be a member including upper surface parts 120aT, 120bT and side surface parts 120aS, 120bS facing downward from the edge of the upper surface parts 120aT, 120bT. The middle cell frame 120b may include an upper surface part 120bT and a side surface part 120bS facing downward from the edge of the upper surface 120bT. The top cell frame 120a may include an upper surface part 120aT and a side surface part 120aS facing downward from the edge of the upper surface part 120aT. For example, the space between the upper surface part 120bT and the side surface part 120bS of the middle cell frame 120b and the bottom cell frame 120c may be the second cooling flow path 300b. Further, the space between the upper surface part 120aT and the side surface part 120aS of the top cell frame 120a and the upper surface part 120bT of the middle cell frame 120b may be the first cooling flow path 300a.

In the case of this embodiment, the separation part 120S of the cell frame 120 may be realized by the middle cell frame 120b. In other words, the separation part 120S may be included in the middle cell frame 120b.

Meanwhile, the battery cells 110 according to this embodiment may have a form inserted into the cell frame 120. For example, a plurality of holes 120h may be formed inside the cell frame, and each of the battery cells 110 may be fixed inside the cell frame 120 in the form inserted into the holes 120h.

In one embodiment, the plurality of holes 120h of the cell frame 120 may include a top cell frame hole 120ah, a middle cell frame hole 120bh, and a bottom cell frame hole 120ch. The top cell frame hole 120ah may be formed in the top cell frame 120a, the middle cell frame hole 120bh may be formed in the middle cell frame 120b, and the bottom cell frame hole 120ch may be formed in the bottom cell frame 120c.

The battery cell 110 may be seated on the bottom cell frame 120c while being mounted to the bottom cell frame hole 120ch (see FIG. 3). However, in other embodiments of the present disclosure, there is no separate bottom cell frame hole, and the battery cell may be seated and fixed on the bottom cell frame 120c by a third waterproof adhesive 500c (see FIGS. 9 to 11) applied onto the bottom cell frame 120c.

The battery cell 110 can be mounted and fixed to the middle cell frame 120b while being inserted into the middle cell frame hole 120bh. In addition, the battery cells 110 can be mounted and fixed to the top cell frame 120a while being inserted into the top cell frame hole 120ah.

Meanwhile, as described above, the waterproof adhesive 500 according to this embodiment may include a third waterproof adhesive 500c applied onto the bottom cell frame 120c. Further, the waterproof adhesive 500 may include a first waterproof adhesive 500a applied onto the top cell frame 120a. Due to the first waterproof adhesive 500a applied onto the top cell frame 120a, it is possible to prevent the coolant CL from leaking beyond the top cell frame 120a into the upper region of the top cell frame 120a. In a state where the battery cell 110 is mounted to the top cell frame hole 120ah of the top cell frame 120a, the first waterproof adhesive 500a may be applied to the upper surface of the top cell frame 120a and the upper region of the battery cell 110.

As described above, the electrical connection between the battery cells 110 can be made by the busbar 131 connecting the first electrode terminal 111 and the second electrode terminal 112. The electrical connection by the busbar 131 may be made at the upper part of the cell frame 120, that is, the upper part of the top cell frame 120a. The busbar 131 can be located at the upper part of the cell frame 120, i.e., the upper part of the top cell frame 120a.

At least a part of the busbar 131 may be surrounded by the first waterproof adhesive 500a. Further, the space surrounding the busbar 131 may be filled with the first waterproof adhesive 500a. Further, the first electrode terminal 111 and the second electrode terminal 112 of the battery cell 110 may be surrounded by the first waterproof adhesive 500a. Further, the gap between the top cell frame hole 120ah and the battery cell 110 inserted therein may be filled with the first waterproof adhesive 500a. Due to the first waterproof adhesive 500a, it is possible to prevent the coolant CL from leaking into the upper region of the cell frame 120. In the battery assembly 100, the waterproof sealing structure at the upper end may be realized by the first waterproof adhesive 500a.

The coolant CL may be insulating oil or cooling water. When the coolant CL, which is cooling water, comes into contact with the HV connection part, a short circuit may occur, which may cause serious safety problems. Further, even if the coolant CL is an insulating oil, and when the coolant CL comes into contact up to the portion where the electrical connection of the battery cells 110 is made, it may adversely affect the electrical connection of the battery cells 110. Thus, in this embodiment, the first waterproof adhesive 500a applied to the upper part of the cell frame 120 makes it possible to minimize the influence of the coolant CL on the electrical connection of the battery cells 110.

The waterproof adhesive 500 may include a second waterproof adhesive 500b applied onto the middle cell frame 120b. As described above, in the cooling flow path 300 having the multi-layer cooling structure, it is preferable that the first cooling flow path 300a and the second cooling flow path 300b are not connected to each other until the coolant CL reaches the connection hole 123. That is, the first cooling flow path 300a and the second cooling flow path 300b may be connected to each other only through the connection hole 123. This makes it possible to made a difference in the order of contact with the coolant CL for each portion of the plurality of battery cells 110, thereby reducing cooling deviation of the battery cells. The second waterproof adhesive 500b can prevent the coolant CL of the first cooling flow path 300a from moving to the second cooling flow path 300b or the coolant CL of the second cooling flow path 300b from moving to the first cooling flow path 300a in the portion excluding the connection hole 123. The waterproof sealing structure between the first cooling flow path 300a and the second cooling flow path 300b excluding the connection hole 123 can be formed by the second waterproof adhesive 500b. The gap between the middle cell frame hole 120bh and the battery cell 110 inserted therein can be filled with the second waterproof adhesive 500b.

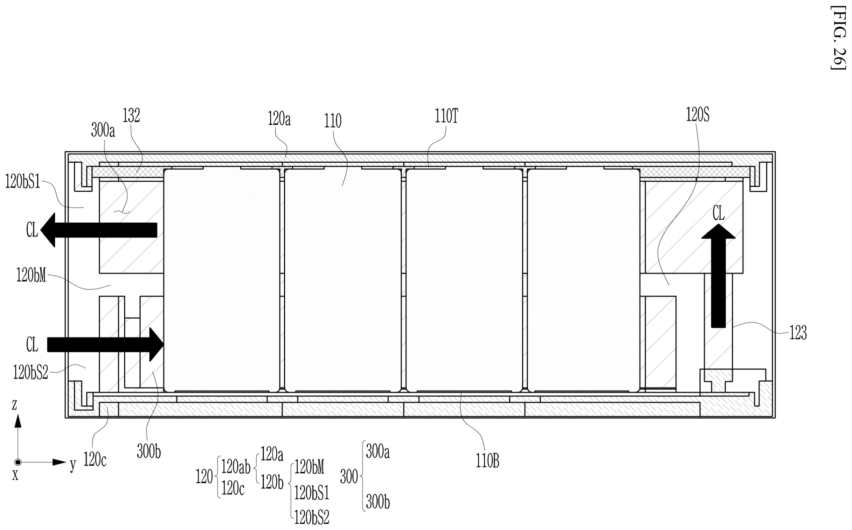

FIG. 26 is a cross-sectional view of a battery assembly according to another embodiment of the present disclosure. However, illustration of the inlet port and the outlet port are omitted in FIG. 26.

Referring to FIG. 26, a battery assembly 100 according to another embodiment of the present disclosure includes a plurality of battery cells 110; and a cell frame 120 in which the battery cells 110 are stored, wherein a cooling flow path 300 is provided inside the cell frame 120 through which a coolant CL flows while being in direct contact with at least a part of the battery cells 110, and the cooling flow path 300 includes a plurality of cooling flow paths 300a, 300b arranged along a longitudinal direction of the battery cells 110 in which the battery cells 110 extend. The longitudinal direction of the battery cells 110 may be a direction between the upper surface 110T and the lower surface 110B of the battery cell 110. The cooling flow paths 300 may be connected through a connection hole 123. This is the same as the structure of the battery assembly described above.

The cell frame 120 may include a bottom cell frame 120c on which battery cells 110 are seated, and a cover cell frame 120ab located on the bottom cell frame 120c. The cover cell frame 120ab may include a middle cell frame 120b and a top cell frame 120a located on the middle cell frame 120b. The top cell frame 120a and the middle cell frame 120b according to this embodiment may be another exemplary structure for realizing a cooling flow path 300 having a multi-layer cooling structure.

The middle cell frame 120b may be a member that includes an intermediate part 120bM, a first side surface part 120bS1 facing upward from an edge of the intermediate part 120bM, and a second side surface part 120bS2 facing downward from an edge of the intermediate part 120bM. Further, the top cell frame 120a may be a plate-shaped member.

The space between the middle cell frame 120b and the bottom cell frame 120c and the space between the top cell frame 120a and the middle cell frame 120b may each correspond to cooling flow paths 300. For example, the space between the intermediate part 120bM and the second side surface part 120bS2 of the middle cell frame 120b and the bottom cell frame 120c may be the second cooling channel 300b. Further, the space between the intermediate part 120bM and the first side surface part 120bS1 of the middle cell frame 120b and the top cell frame 120a may be the first cooling flow path 300a.

In this embodiment, the separation part 120S of the cell frame 120 may be realized by the middle cell frame 120b. In other words, the separation part 120S may correspond to the intermediate part 120bM of the middle cell frame 120b.

In the case of the cell frame 120 shown in FIG. 26, the middle cell frame 120b is different from the cell frame 120 shown in FIG. 25 in that it includes an intermediate part 120bM, a first side surface part 120bS1, and a second side surface part 120bS2. The cell frame 120 shown in FIG. 26 has the advantage of being able to reduce portions where coolant leakage may occur, as compared to the cell frame 120 shown in FIG. 25. In the cell frame 120 shown in FIG. 26, since the portion between the first cooling flow path 300a and the second cooling flow path 300b is a portion of the middle cell frame 120b that is integrally formed without a gap, there is no need to worry about coolant leakage. On the other hand, the cell frame 120 shown in FIG. 25 may require a second waterproof adhesive 500b (see FIG. 9) to prevent coolant leakage between the first cooling flows path 300a and the second cooling flow path 300b.

Meanwhile, referring again to FIG. 26, a busbar frame 132 on which a busbar connected to the electrode terminals of the battery cells 110 is mounted may be located below the top cell frame 120a. The busbar frame 132 may perform a function to support the busbar.

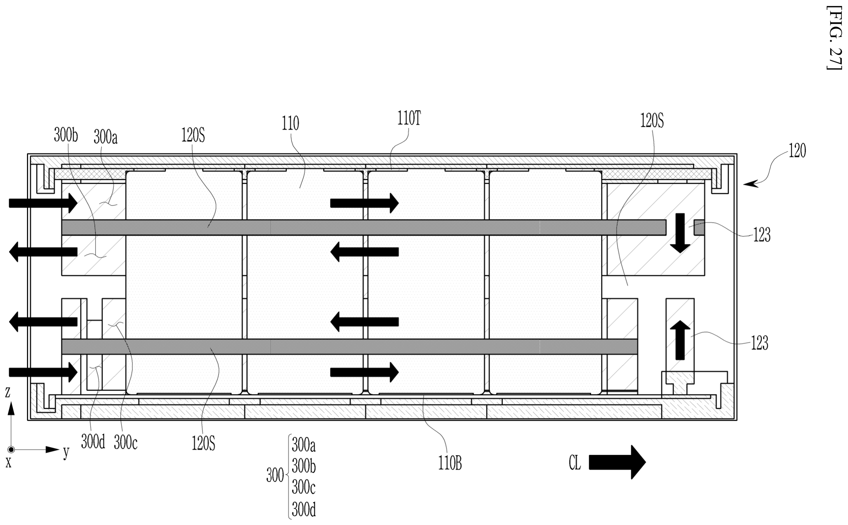

FIG. 27 is a cross-sectional view of a battery assembly according to another embodiment of the present disclosure.

Referring to FIG. 27, a battery assembly 100 according to other embodiments of the present disclosure includes a plurality of battery cells 110; and a cell frame 120 in which the battery cells 110 are stored, wherein a cooling flow path 300 is provided inside the cell frame 120 through which a coolant CL flows while being in direct contact with at least a part of the battery cells 110, and the cooling flow path 300 includes a plurality of cooling flow paths 300 arranged along the longitudinal direction of the battery cell 110 in which the battery cell 110 extends. The longitudinal direction of the battery cell 110 may be a direction between the upper surface 110T and the lower surface 110B of the battery cells 110. The cooling flow paths 300 may be connected through a connection hole 123.

The cooling flow path 300 may include a first cooling flow path 300a, a second cooling flow path 300b, a third cooling flow path 300c, and a fourth cooling flow path 300d. That is, a battery assembly having a four-layer cooling structure is shown in FIG. 27. As described above, three or more cooling flow paths may be provided as necessary.

The flow directions of the coolant CL in the first cooling flow path 300a and the second cooling flow path 300b may be opposite to each other, and the flow directions of the coolant CL in the third cooling flow path 300c and the fourth cooling flow path 300d may be opposite to each other. Further, the flow directions of the coolant CL in the first cooling flow path 300a and the fourth cooling flow path 300d may be equal to each other, and the flow directions of the coolant CL in the second cooling flow path 300b and the third cooling flow path 300c may be equal to each other. The flow direction of the coolant in the first cooling flow path 300a, the second cooling flow path 300b, the third cooling flow path 300c, and the fourth cooling flow path 300d may be freely set as necessary.

As described above, the area where at least one cooling flow path 300 made to match with the flow direction of the coolant CL among the plurality of cooling flow paths 300 is in contact with the battery cell 110 may be 30% or more and 70% or less of the area where all of the plurality of cooling flow paths 300 are in contact with the battery cell 110. Here, the area where at least one cooling flow path 300 made to match with the flow direction of the coolant CL is in contact with the battery cell 110 may be the sum of the areas where the first cooling flow path 300a and the fourth cooling flow path 300d are in contact with the battery cell 110. Alternatively, the area where at least one cooling flow path 300 made to match with the flow direction of the coolant CL is in contact with the battery cell 110 may be the sum of the areas where the second cooling flow path 300b and the third cooling flow path 300c are in contact with the battery cell 110. At this time, the area where all of the plurality of cooling flow paths 300 are in contact with the battery cell 110 may mean the total sum of the areas where the first cooling flow path 300a, the second cooling flow path 300b, the third cooling flow path 300c, and the fourth cooling flow path 300d are in contact with the battery cell 110.

Referring again to FIGS. 7, 9 and 11, the bottom cell frame 120c and the cover cell frame 120ab according to this embodiment may be connected by a bolt member 700. In one embodiment, the bottom cell frame 120c and the cover cell frame 120ab may each include a protruding part that protrudes in a direction parallel to the xy plane, and the bottom cell frame 120c and the cover cell frame 120ab may be connected to each other by a bolt member 700 that is fastened by passing through all of the protruding parts. In one embodiment, the bolt member 700 may be connected to a separate nut member, and in another embodiment, the bolt member 700 may pass through one of the bottom cell frame 120c and the cover cell frame 120ab and then be screw-coupled to a fastening hole formed in the other of the bottom cell frame 120c and the cover cell frame 120ab. Since the bottom cell frame 120c and the cover cell frame 120ab are coupled by the bolt member 700, the fixing force between the bottom cell frame 120c and the cover cell frame 120ab is increased, and the coolant leakage between the bottom cell frame 120c and the cover cell frame 120ab is prevented, thereby improving the sealing performance.

Further, the middle cell frame 120b and the top cell frame 120a may be coupled by the bolt member 700. In one embodiment, each of the middle cell frame 120b and the top cell frame 120a may include a protruding part that protrudes in a direction parallel to the xy plane, and the middle cell frame 120b and the top cell frame 120a may be coupled to each other by the bolt member 700 that is fastened by passing through all of the protruding parts. In one embodiment, the bolt member 700 can be coupled to a separate nut member, and in another embodiment, the bolt member 700 may pass through one of the middle cell frame 120b and the top cell frame 120a and then be screw-coupled to a fastening hole formed in the other of the middle cell frame 120b and the top cell frame 120a. Since the middle cell frame 120b and the top cell frame 120a are coupled by the bolt member 700, the fixing force between the middle cell frame 120b and the top cell frame 120a is increased, and the coolant leakage between the middle cell frame 120b and the top cell frame 120a is prevented, thereby improving the sealing property.

Meanwhile, referring again to FIG. 1, the battery assembly 100 according to an embodiment of the present disclosure shown in FIG. 1 can be mounted directly on a vehicle or chassis by itself. That is, in the case of the battery assembly 100 according to this embodiment, the battery cells 110 can be mounted directly on a vehicle or chassis while being stored in a cell frame 120. The inlet port 121 and the outlet port 122 of the cell frame 120 may be connected to a coolant circulation system within the vehicle.

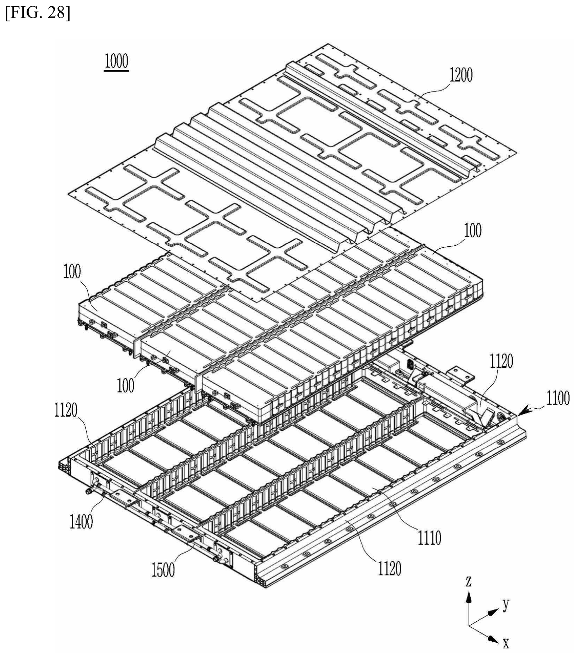

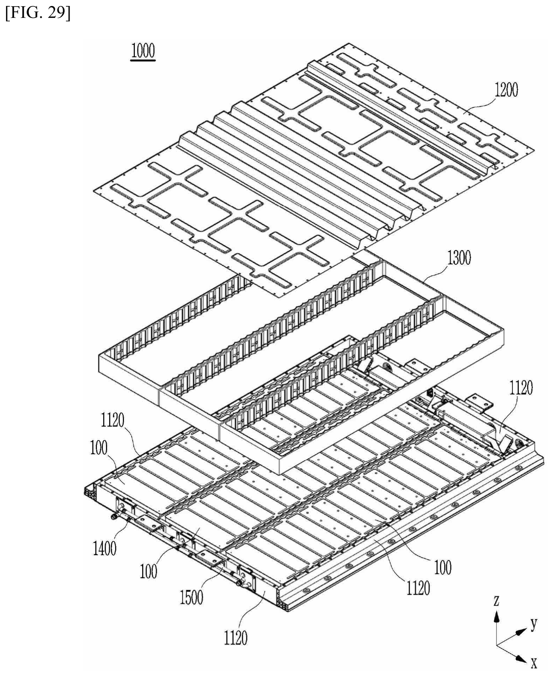

FIGS. 28 and 29 are exploded perspective views of a battery pack according to an embodiment of the present disclosure.

Referring to FIGS. 1, 28 and 29, a battery pack 1000 according to another embodiment of the present disclosure may include at least one battery assembly 100; a pack frame 1100 that stores at least one battery assembly 100 and is opened on one side; and a pack cover 1200 that covers the opened one side of the pack frame 1100. In one embodiment, FIGS. 28 and 29 illustrate that three battery assemblies 100 are stored in the pack frame 1100.

The pack frame 1100 may include a bottom part 1110 and a side beam 1120. At least one battery assembly 100 may be placed on the bottom part 1110. The side beam 1120 may extend along the edge of the bottom part 1110. and may extend in a direction perpendicular to one surface of the bottom part 1110. An internal space having opened upper part may be provided by the bottom part 1110 and the side beam 1120, and the battery assembly 100 may be stored in this internal space. The pack cover 1200 may cover the upper surface of the battery assembly 100 mounted on the pack frame 1100.

Meanwhile, the battery pack 1000 according to this embodiment may include a filling member 1300 foamed in the space inside the pack frame 1100 and the pack cover 1200. The filling member 1300 according to this embodiment may be a foamed member. The filling member 1300 may be a foamed member that is filled in the space inside the pack frame 1100 and the pack cover 1200 and then foamed.

The filling member 1300 according to this embodiment may be formed of a resin. For example, the filling members 1300 may be formed of a resin or the like. The filling member 1300 may include an air pocket, and an adhesive may be provided in this air pocket. The filling member 1300 may be a foamed rubber, i.e., cellular or sponge. The filling member 1300 may include an air-filled matrix structure. The filling member 1300 may be based on, for example, silicone, polyurethane, or other organic materials.

For example, the filling member 1300 may be applied onto the pack frame 1100 and foamed into a plate shape, or may be foamed using a spray. The filling member 1300 may include a foaming agent.

When the filling member 1300 makes contact with other components, it can be them hardened and coupled with the other components to fix and support them. Therefore, the adhesive force between the components that the filling member 1300 contacts may be made strong. In this embodiment, the adhesive force between the pack frame 1100, the pack cover 1200, and the battery assemblies 100 may be made strong by the filling member 1300. In addition, the filling member 1300 can absorb vibration and impact applied to the battery pack 1000, so that components within the battery pack 1000 are not separated or detached, thereby improving the safety and mechanical reliability of the battery pack.

Meanwhile, the battery pack 1000 according to this embodiment may include an inlet pipe 1400 connected to the inlet port 121 of the battery assembly 100 and an outlet pipe 1500 connected to the outlet port 122 of the battery assembly 100.

Each of the inlet pipe 1400 and the outlet pipe 1500 may pass through the side beam 1120 and be connected to the inlet port 121 and the outlet port 122 of the battery assembly 100. Further, the inlet pipe 1400 and the outlet pipe 1500 may be connected to a coolant circulation system inside the vehicle. The coolant supplied by the coolant circulation system inside the vehicle reaches the inlet port 121 through the inlet pipe 1400. The coolant circulating inside the battery assembly 100 and discharged through the outlet port 122 is collected to the coolant circulation system again through the outlet pipe 1500.

In the embodiments above, expressions indicating directions such as "front," "rear," "left," "right," "up," and "down" have been used. These expressions are used only to facilitate the description, and may vary, for example, depending on the location of a target object or an observer.

One or more battery assemblies according to certain embodiments of the present disclosure described above may be mounted together with various control and protection systems such as a battery management system (BMS), a battery disconnect unit (BDU), and a cooling system, to form a battery pack.

The battery assemblies or the battery pack may be applied to various devices, which include, for example, transportation vehicles such as electric bicycles, electric vehicles, and hybrids, and energy storage systems (ESS). However, without being limited thereto, the battery assemblies or the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery assembly
110: battery cell
120: cell frame
120ab: cover cell frame
120c: bottom cell frame
300: cooling flow path

## Claims

1. A battery assembly comprising:
a plurality of battery cells; and
a cell frame in which the plurality of battery cells are stored;
wherein the inside of the cell frame is provided with a cooling flow path through which a coolant flows while being in direct contact with at least a part of the battery cells,
wherein the cooling flow path comprises a plurality of cooling flow paths arranged along a longitudinal direction of the battery cells in which the battery cells extend, and
wherein a flow direction of the coolant in any one of the plurality of cooling flow paths and a flow direction of the coolant in the other of the plurality of cooling flow paths are opposite to each other.

2. The battery assembly according to claim 1,
wherein the longitudinal direction is a direction between one surface of the battery cell and the other surface facing the one surface, and
at least one of electrode terminals of the battery cells is located on the one surface of the battery cells.

3. The battery assembly according to claim 1,
wherein the cell frame comprises an inlet port into which the coolant flows, with the coolant flowing through the cooling flow path and being in direct contact with the battery cells, and an outlet port through which the coolant is discharged.

4. The battery assembly according to claim 3,
wherein any one of the plurality of cooling flow paths is connected to the inlet port, and
the other of the plurality of cooling flow paths is connected to the outlet port.

5. The battery assembly according to claim 3,
wherein the coolant flowing into the inlet port flows along the cooling flow paths and is then discharged through the outlet port.

6. The battery assembly according to claim 1,
wherein the area where at least one cooling flow path made to match with the flow direction of the coolant among the plurality of cooling flow paths is in contact with the battery cell is 30% or more and 70% or less of the area where all of the plurality of cooling flow paths are in contact with the battery cell.

7. The battery assembly according to claim 1,
wherein the cooling flow paths comprise a first cooling flow path and a second cooling flow path, and
the flow direction of the coolant in the first cooling flow path and the flow direction of the coolant in the second cooling flow path are opposite to each other.

8. The battery assembly according to claim 7,
wherein the cell frame comprises a separation part that partitions the first cooling flow path and the second cooling flow path and is located between the first cooling flow path and the second cooling flow path.

9. The battery assembly according to claim 8,
wherein based on the longitudinal direction of the battery cell, the separation part is located in a space between the 30% point of the height of the battery cell and the 70% point of the height of the battery cell.

10. The battery assembly according to claim 1,
wherein the cell frame comprises a connection hole that connects a plurality of cooling flow paths.

11. The battery assembly according to claim 10,
wherein in the connection hole, the width of the space through which the coolant flows is constant.

12. The battery assembly according to claim 10,
wherein the connection hole has a region where the width of the space where the coolant flows is narrowed.

13. The battery assembly according to claim 12,
wherein in the connection hole, the width difference between the widest part of the space where the coolant flows and the narrowest part of the space where the coolant flows is 1.0 mm or more, and is not more than 5 times the gap between the battery cells.

14. The battery assembly according to claim 10,
wherein the cell frame comprises an inlet port and an outlet port through which the coolant flows in and is discharged, with the coolant flowing through the cooling flow path and being in direct contact with the battery cells,
at least one of the inlet port or the outlet port is provided with a distribution mechanism that divides the coolant into a plurality of cooling channels, and
the connection holes are provided in plurality of numbers, and the plurality of connection holes correspond one to one to the cooling channels distributed by the distribution mechanism.

15. The battery assembly according to claim 1,
wherein the gap between the battery cells is 1.5 mm or more and 2.5 mm or less.

16. The battery assembly according to claim 1,
wherein the cell frame comprises a bottom cell frame on which the battery cells are seated and a cover cell frame located on the bottom cell frame.

17. The battery assembly according to claim 16,
wherein the cover cell frame comprises a middle cell frame and a top cell frame located on the middle cell frame, and
the space between the middle cell frame and the bottom cell frame and the space between the top cell frame and the middle cell frame correspond to the cooling flow paths, respectively.

18. The battery assembly according to claim 17,
wherein each of the middle cell frame and the top cell frame is a member that includes an upper surface part and a side surface part facing downward from an edge of the upper surface part.

19. The battery assembly according to claim 17,
wherein the middle cell frame is a member that includes an intermediate part, a first side surface part facing upward from an edge of the intermediate part, and a second side surface part facing downward from an edge of the intermediate part, and
the top cell frame is a plate-shaped member.

20. The battery assembly according to claim 1,
wherein the battery cells are mounted directly to a vehicle or chassis in a state of being stored in the cell frame.

21. A battery pack comprising:
a battery assembly according to claim 1;
a pack frame that stores the battery assembly and is opened on one side, and
a pack cover that covers the opened one side of the pack frame.
